(19) Europäisches Patentamt
European Patent Office
Office européen des brevets

(11) **EP 1 190 240 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(21) Anmeldenummer: **00940152.2**

(22) Anmeldetag: **26.04.2000**

(51) Int Cl.$^7$: **G01N 27/07**, G01N 33/18

(86) Internationale Anmeldenummer:
**PCT/DE2000/001313**

(87) Internationale Veröffentlichungsnummer:
**WO 2000/067008 (09.11.2000 Gazette 2000/45)**

(54) **VERFAHREN ZUR BESTIMMUNG DES SALZGEHALTES VON FLÜSSIGKEITEN UND VORRICHTUNG ZUR VERFAHRENSDURCHFÜHRUNG**

METHOD FOR DETERMINING THE SALT CONTENT OF LIQUIDS AND DEVICE FOR CARRYING OUT SAID METHOD

PROCEDE POUR DETERMINER LA TENEUR EN SEL DE LIQUIDES, ET DISPOSITIF POUR LA MISE EN OEUVRE DE CE PROCEDE

(84) Benannte Vertragsstaaten:
**AT BE CH CY DE DK ES FI FR GB GR IE IT LI LU MC NL PT SE**

(30) Priorität: **30.04.1999 DE 19921079**

(43) Veröffentlichungstag der Anmeldung:
**27.03.2002 Patentblatt 2002/13**

(73) Patentinhaber: **Stiftung Alfred-Wegener-Institut für Polar- und Meeresforschung 27568 Bremerhaven (DE)**

(72) Erfinder: **OHM, Klaus D-27572 Bremerhaven (DE)**

(56) Entgegenhaltungen:
**US-A- 3 963 979          US-A- 4 672 322**

- **BIANCHI H ET AL: "A CELL FOR THE STUDY OF THE ELECTROLYTIC CONDUCTIVITY AT HIGH TEMPERATURE IN AQUEOUS SOLUTIONS" REVIEW OF SCIENTIFIC INSTRUMENTS,US,AMERICAN INSTITUTE OF PHYSICS. NEW YORK, Bd. 64, Nr. 6, 1. Juni 1993 (1993-06-01), Seiten 1636-1640, XP000380701 ISSN: 0034-6748**
- **PATENT ABSTRACTS OF JAPAN vol. 016, no. 357 (P-1395), 31. Juli 1992 (1992-07-31) & JP 04 110760 A (YOKOGAWA ELECTRIC CORP), 13. April 1992 (1992-04-13)**
- **FRACASSI DA SILVA J A ET AL: "DEVELOPMENT OF A DIGITAL CONDUCTIVITY METER WITH FREQUENCY RESPONSE FOR REMOTE MONITORING" INSTRUMENTATION SCIENCE & TECHNOLOGY,US,J.E. WAMPLER, Bd. 26, Nr. 4, 1. September 1998 (1998-09-01), Seiten 409-420, XP000776683 ISSN: 1073-9149**

**Beschreibung**

Die Erfindung bezieht sich auf ein Verfahren zur Bestimmung des Salzgehaltes von Flüssigkeiten durch standardkalibrierte Messungen der elektrischen Leitfähigkeit einer temperierten Flüssigkeitsprobe in einer Messzelle, die In einem beständig gekühlten und mechanisch gerührten sowie heizbaren und nach außen isolierten Wasserbad angeordnet ist, unter regelparametrischer Berücksichtigung der thermischen Verhältnisse im Wasserbad und auf eine Vorrichtung zur Verfahrensdurchführung.

Zustandsgrößen im thermodynamischen Sinn beschreiben den Zustand einer Flüssigkeit eindeutig. Insbesondere für Meerwasser als wohldefinierte Flüssigkeit genügen drei Zustandsgrößen für die Beschreibung, alle anderen lassen sich aus diesen ableiten. Die klassische Ozeanographie sieht den Größensatz aus Temperatur, Salzgehalt und Druck als die drei in Meerwasser am einfachsten und genauesten zu messenden Zustandsgrößen an. Durch den Einsatz von elektrischen Sonden können ab etwa 1960 die elektrische Leitfähigkeit, die Temperatur und der Druck des Meeres kontinuierlich in situ elektrisch gemessen werden. Dabei wird anstelle der klassischen Zustandsgröße "Salzgehalt" die "elektrische Leitfähigkeit" in den Satz der drei den Zustand von Meerwasser beschreibenden charakteristischen Messgrößen aufgenommen, weil diese in situ einfacher messbar und mit Hilfe einer empirischen, genormten Formel in den Salzgehalt umrechenbar ist. Obwohl man heute also zur Bestimmung der Flüssigkeitsdichte den Salzgehalt nicht bräuchte, muss man ihn zum Verständnis ozeanischer Vorgänge heranziehen. Der Salzgehalt als konservative Größe bleibt sowohl bei Temperatur- als auch bei Druckänderungen konstant und wird auch durch Stoffwechselvorgänge der im Meer lebenden Pflanzen und Tiere nicht beeinflusst. Er unterliegt bei der Mischung unterschiedlich salzhaltigen Meerwassers einfachen Regeln, die sich aus der Erhaltung der Massen des Wassers und des Salzes ergeben. Daher ist der Salzgehalt ausgezeichnet zur Charakterisierung von Wasserkörpern und als Tracer zur Untersuchung großräumiger Strömungen geeignet. Aber auch bei anderen Flüssigkeiten, beispielsweise in der Arzneimittelchemie oder der Lebensmittelanalyse, kann die Kenntnis des jeweiligen Salzgehaltes von Bedeutung sein.

Aus dem Stand der Technik sind unterschiedliche Verfahren und Anordnungen zur Bestimmung des Salzgehaltes von Flüssigkeiten bekannt in der Japanischen Patentschrift JP 63111457 (1988) ist ein Verfahren angegeben, bei dem der Salzgehalt aus den Zustandsgrößen Temperatur, Druck und Schallgeschwindigkeit ermittelt wird. Dazu werden Ultraschall-Messstrecken im Unterwasserbereich positioniert und die Laufzeiten von oszillatorgenerierten, sinusförmigen Ultraschallsignalen zwischen Sender und Empfänger registriert.

In der japanischen Patentschrift JP 60169554 (1985) wird eine andere Methode zur in-situ-Messung der Seewasser-Salzkonzentration offenbart, bei der eine Spule mit geeignetem Windungsdurchmesser und Länge in einem unmagnetischen, nichtmetallischen und wasserdichten Behälter in die See abgesenkt und mit einer Wechselspannung beaufschlagt wird. Der magnetische Fluss durchsetzt dann das umgebende Seewasser. Die Leitfähigkeit und damit die Höhe des induktionsstromes durch das Wasser wird vom Salzgehalt bestimmt Der induktionsstrom im Wasser erzeugt eine Gegeninduktion in der Spule, die den Spulenstrom schwächt. Der gemessene Spulenstrom ist dann ein direktes Maß für die Salzkonzentration im Seewasser. Eingeführt wurde die induktive Methode bereits 1957 in dem Aufsatz "Gerät zur Schnellregistrierung in der Ozeanographie" von H. Hinkelmann (Z. f. angewandte Physik einschl. Nukleonik, Band IX, H10, S.505-513). Der Seewasserwiderstand wird als Zweig einer fast abgeglichenen Wechselstrombrücke verwendet. Durch einen komplexen Brückenwiderstand wird ein Phasenwinkel zwischen der Eingags- und der Ausgangsspannung erzeugt, der abhängig vom Seewasserwiderstand ist Dieser Phasenwinkel bestimmt die Frequenz eines Oszillators, der die Wechselstrombrücke enthält. Bei den entsprechenden Geraten zu diesen beiden Verfahren handelt es sich um Laborgeräte zur Kalibrierung von in-situ-Geräten. Zu diesen findet man genauere Beschreibungen in den Aufsätzen "A conductivity bridge for measurement of the salinity of sea-water" (1956, Schleicher, Bradshaw, Journal Conseil Permanent International pour l'Exploration de la Mer, Band 22, S. 9-20); "A modification of the Werner-Smith-Soule salinity bridge for the determination of salinity in sea water with details of construction, operation und maintenance (Paquette, 1958, Univ. of Washington, Department of Oceanography, Technical Report No. 54-14, S. 1-57); "A new automated laboratory salinometer" (1975, Dauphinee, Klein, Sea Technologie, Band 16, S. 23-25) oder "Progress in the measurement of salinity and oxygen at the Woods Hole Oceanographic Institution" (1987, Knapp, Stalcup, Technical Report, WHOI-87-4, Woods Hole Oceanographic Institution, S. 27 ff.).

In der japanischen Patentschrift JP 62085852 (1987) wird ein Verfahren beschrieben, mit dem der Salzgehalt in Flüssigkeiten gemessen werden kann, deren Temperatur von einer Referenztemperatur abweicht. Dazu wird die Leitfähigkeits-Messspannung durch eine temperaturabhängige Kompensationsspannung geteilt. Bei dem aus dem Aufsatz "An inductive Salinometer" von Brown und Hamon (1961, Deep-Sea-Research, Band 8, S. 65-71) bekannten Gerät wird die Temperaturabhängigkeit mittels NTC-Thermistoren ausgeglichen.

Aus der kanadischen Patentschrift CA 1199367 bzw. aus der korrespondierenden amerikanischen Patentschrift US 4511845 ist ein Verfahren zur Ermittlung des Salzgehaltes bekannt, das auf der Bestimmung einer Leitfähigkeitsrate von Probenwasser zu Standard-Seewasser beruht Die wesentlichen Inhalte dieser Patentschriften sind auch in dem Prospekt "Laboratory Salinometer - Autosat - Model 8400 A" der Firma Guildline Instruments, Ltd. P.O. Box 99, Smith Falls, Ontario, K7A 4S9 Canada, veröffentlicht. Von diesem Prospekt geht die Erfindung als nächstliegendem **Stand der Technik** aus. Da es sich hierbei um ein Geräteblatt handelt, soll jedoch zunächst das zugrundeliegende Messverfahren, das auch in den Patentschriften beschrieben wird, erörtert werden.

Das Verfahrensprinzip des Autosal (AS) 8400 besteht darin, dass die elektrische Leitfähigkeit einer Seewasserprobe gemessen wird, nachdem der Formfaktor der Messzelle und die Probentemperatur an Standardseewasser als Normal Implizit bestimmt worden sind. Dabei wird vorausgesetzt, dass der Formfaktor und die Temperatur bis zur nächsten Standardisierung konstant bleiben. Es wird das Verhältnis der Leitfähigkeit einer Seewasserprobe zu Standardseewasser bei einer bestimmten Temperatur bestimmt. Der Salzgehalt wird nach der "Praktischen Salzgehaltsskala von 1978" berechnet Der Temperaturterm dieser Formel hat einen geringen Einfluss auf das Ergebnis der Salzgehaltsberechnung, sodass die tatsächlich während der Messung herrschende Temperatur nicht besonders genau bekannt sein muss. Wichtig ist jedoch, dass die beim Standardisieren herrschende Temperatur stabil bleibt. Jede Temperaturdrift schlägt voll mit der nicht unbeträchtlichen Abhängigkeit der Leitfähigkeit des Meerwassers von der Temperatur durch. Für die angestrebte Messgenauigkeit des Salzgehaltes muss die Temperatur zwischen zwei Standardisierungen deshalb sehr genau konstant gehalten werden. Damit diese Konstanz, die für die Temperaturregelung und die Einhaltung der Umgebungsbedingungen eine sehr hohe Anforderung darstellt, erreicht werden kann, sollte sich der Verfahrensprozess zum Erreichen der bestmöglichen Genauigkeit mindestens über vier Tage einschwingen können. Gleiches gilt nach jeder aufgetretenen Störung im Verfahrensablauf, beispielsweise durch Fehler bei der manuellen Bedienung. Um zu erreichen, dass das Probenwasser die Temperatur des Bades annimmt, wird die Probe durch eine Metallkapillare im Wasserbad, die als Wärmetauscher fungiert, geleitet. Kann jedoch durch einen zu großen anfänglichen Temperaturunterschied der Wärmetauscher die Temperaturangleichung nicht vollständig bewirken, ist die zweite Voraussetzung nicht erfüllt. Bei abweichender Probentemperatur wird durch den Wärmetauscher Wärme in das Bad eingetragen, die zu einer Temperaturänderung führen kann, die über den zulässigen Toleranzen liegt.

Die Betriebserfahrung mit dem im AS 8400 realisierten Messverfahren hat gezeigt, dass auch vom Hersteller noch zugelassene Probentemperaturabweichungen zu unzulässigen Temperaturänderungen im Wasserbad führen können. Auftretende Störungen können nicht befriedigend ausgeregelt werden. Um trotzdem genaue Messungen durchführen zu können, muss das bekannte Messverfahren deshalb in einem hochkonstanten Klimaraum durchgeführt werden, wie er bei Felduntersuchungen jedoch nur auf wenigen Forschungsschiffen zur Verfügung steht Auf Schiffen, die über keine derartig aufwendige Laborausrüstung verfügen, müssen deshalb die Proben im Institutslabor untersucht werden. Während der üblichen Lagerzeiten von mindestens vier Wochen bis zur Heimkehr des Schiffes können jedoch gravierende Probenveränderungen eintreten. Zusammenfassend gesehen ist also bei dem bekannten Verfahren und bei dem Gerät zu seiner Durchführung eine zu starke Abhängigkeit von den Umgebungs- und Betriebsbedingungen und von der Person des Bedieners festzustellen.

Die der vorliegenden Erfindung zugrunde liegende **Problemstellung** ist deshalb darin zu sehen, die bei dem bekannten Verfahren auftretenden Schwierigkeiten zu vermeiden und darüber hinaus durch eine Reihe von geeigneten technischen Maßnahmen eine entsprechende Vorrichtung zur Verfahrensdurchführung deutlich zu verbessern. Ziel der Erfindung sollte eine höhere Messgenauigkeit bei einfacherem und sicherem Betrieb sein. Dabei sollten auch die Aspekte der Automatisierung und der Ökonomie Berücksichtigung finden.

Diese Problematik wird bei dem erfindungsgemäßen **Verfahren** dadurch gelöst, dass die aktuelle Wasserbadtemperatur als Äquivalent für die Probentemperatur mit einer hohen Wiederholgenauigkeit gemessen wird unter Einbeziehung eines von der geforderten Genauigkeit bei der Salzgehaltsbestimmung festgelegten maximal zulässigen Schleppfehlers zwischen Wasserbad- und Probentemperatur und der Regelparameter für die Berücksichtigung der thermischen Verhältnisse die aus den Temperaturmessungen ableitbare zeitliche Drift der Wasserbadtemperatur ist, deren erlaubter Maximalwert als Quotient aus dem maximal zulässigen Schleppfehler und einer Zeitkonstanten der Messzelle für einen Temperaturausgleich zwischen dem Messzelleninneren und dem Wasserbad definiert ist.

Bei dem erfindungsgemaßen Verfahren wird die übliche Konstanthaltung der Wasserbadtemperatur, deren Regelung hauptsächlich durch auftretende Totzeiten im Regelkreis äußerst schwierig ist, zur Berücksichtigung der thermischen Verhältnisse im Wasserbad aufgegeben. Die Wasserbadtemperatur kann sich jetzt entsprechend den unbeeinflussten Umgebungsbedingungen einstellen. Dabei muss nur ihre Änderungsgeschwindigkeit bei auftretenden Veränderungen in vorgegebenen Grenzen liegen, ansonsten greift eine Bilanzregelung ein. Das Verfahren kann deshalb in einem normalen Laborraum durchgeführt werden. Es werden die aktuellen Wasserbadtemperaturen mit einer hohen Wiederholgenauigkeit, d.h. mit einer hohen Auflösung gemessen und mit der registrierten Zeit zwischen den einzelnen Messungen bzw. zur Standardkalibrierung zur Ermittlung einer zeitlichen Temperaturdrift als Regelparameter in Relation gesetzt. Bei der Standardkalibrierung werden die realen Werte einer aktuell verwendeten Standard-Seewasserprobe zugrundegelegt und mögliche Kalibrierfehler des Temperaturfühlers berücksichtigt. Damit kann für die Bestimmung des Salzgehalts der Flüssigkeitsprobe die angezeigte Wasserbadtemperatur ohne weitere Berücksichtigung des Messfehlers des Temperaturfühlers eingesetzt werden.

Die Grundvoraussetzung für diese Vorgehensweise ist die Annahme einer Äquivalenz zwischen der für den Salzgehalt der Flüssigkeitsprobe relevanten Probentemperatur $\vartheta_P$, die aber in der Messzelle selbst nicht mit der notwendigen Präzision gemessen werden kann, ohne die Leitfähigkeitsmessung unzulässig zu beeinträchtigen, und der ohne wesentliche Beeinflussung messbaren Wasserbadtemperatur $\vartheta_B$. Dabei soll mit dem Begriff "Äquivatenz" ausgedrückt werden, dass die Gleichheit zwischen Probentemperatur $\vartheta_P$ und Wasserbadtemperatur $\vartheta_B$ nur bis auf eine zulässige Differenz postuliert wird. Bei dieser zulässigen Differenz handelt es sich um einen "Schleppfehler" $\Delta\vartheta = \vartheta_B - \vartheta_P$, der dadurch hervorgerufen wird, dass Bad und Probe nicht sofort die gleiche Temperatur haben, wenn sich die Badtemperatur $\vartheta_B$ ändert. Sein Grenzwert wird in Abhängigkeit von der für den Salzgehalt gewünschten Ergebnisgenauigkeit als "maximal zulässiger Schleppfehler" $\Delta\vartheta_{max}$ fest vorgegeben.

Die Messgenauigkeit der Temperatur lag bei den ersten CTD-Messungen im Bereich von 10 mK. Der Fortschritt der Messtechnik ermöglichte jedoch genauere Messungen. Diese wurden geradezu gefordert, als Ozeanographen sich polaren Gebieten zuwandten. Dort ist der vorkommende Wertebereich gegenüber dem Weltozean stark eingeschränkt und besonders der Bereich in der Umgebung des Gefrierpunktes von Wasser relevant, sodass eine entsprechend höhere Messgenauigkeit im Bereich von 1 mK angestrebt werden sollte. Sie zu erreichen, erfordert verbesserte Messverfahren und gegen Quereinflüsse unempfindlichere Bauteile, aber auch reproduzierbare Eichverfahren und stabilere Standards. Der heute angestrebte größte zulässige Fehler sollte im Salzgehalt, dessen Maß keine Einheit besitzt, unter $10^{-3}$ liegen, was einem maximalen relativen Fehler von $3\cdot10^{-5}$ entspricht. Dazu muss der Temperatur- bzw. der Schleppfehler kleiner als 1 mK sein.

Die Regelung bei dem erfindungsgemäßen Verfahren zielt auf eine ausgeglichene Bilanz der positiven und negativen Wärmeströme in das Wasserbad, damit dessen zeitliche Temperaturänderung kleiner bleibt als ein vorgegebener Grenzwert "maximal erlaubte Drift" $\alpha_{max}$. Wird dieser erreicht oder überschritten, herrscht Messverbot. Die Regelung eines resultierenden Wärmeflusses ist einfacher als die Regelung auf eine fest vorgegebene, in engen Grenzen einzuhaltende Temperatur und erreicht ihr Ziel wesentlich schneller als diese. Der Regler muss jetzt nur noch eine Temperaturdrift erkennen und die Summe der Wärmeströme bis auf einen zulässigen Restfehler auf Null bringen. Eine Änderung der Umgebungsbedingungen erfordert jetzt nicht mehr unbedingt ein sofortiges Eingreifen der Regelung. was auch von Bedeutung für die Messhäufigkeit und die Auswertung ist

Zum Nachweis der Richtigkeit der Äquivalenzannahme von Wasserbad- und Probentemperatur und zur Angabe von Grenzwerten und Zahlenbeispielen für die oben genannten Größen wird auf das Ende des allgemeinen Beschreibungsteils verwiesen.

Eng verbunden mit dem erfindungsgemäßen Verfahren und den umgesetzten Prinzipien ist auch eine Vorrichtung zur Verfahrensdurchführung. Um diese Zusammenhänge, auch in den verschiedenen Ausführungsvarianten, und die Unterschiede zum Stand der Technik klar herausstellen zu können und um Wiederholungen zu vermeiden, soll deshalb zunächst auf ein bevorzugtes erfindungsgemäßes Gerät zur Durchführung des erfindungsgemäßen Verfahrens eingegangen werden.

Der Stand der Technik, von dem die Erfindung bei der Realisierung einer entsprechenden Messvorrichtung ausgeht, wird von dem bereits weiter oben erwähnten, allgemein anerkannten Standardgerät, dem "Autosal (AS) 8400" der Firma "Guildline" gebildet Hierbei handelt es sich um ein Gerät, bei dem eine temperierte Flüssigkeitsprobe aus einer Probenflasche in eine Messzelle überführbar ist, die in einem Wasserbad angeordnet ist, das mit einem Kühl-, einem Rühr- und einem Heizelement sowie einem Wärmetauscher ausgerüstet ist und an seiner Wandung eine Außenisolierung aufweist, und das Ober eine Regeleinrichtung zur Berücksichtigung der thermischen Verhältnisse im Wasserbad verfügt. Weitere Detailerklärungen des bekannten Geräts erfolgen im Zusammenhang mit entsprechenden Ausgestaltungen bei der Erfindung.

Um die erfindungsgemäße Vorrichtung von dem bekannten Gerät zu unterscheiden, wird für diese die Bezeichnung "Leitfähigkeits-Referenz-Messplatz" (LRM) gewählt. Zur Zeit der Konzeption des AS 8400 waren Thermometer mit Langzeit-Messfehlern kleiner als 0,3 mK außerordentlich teuer. Deswegen wurde das bekannte Messverfahren auf die Konstanthaltung einer Temperatur und nicht auf ihre Messung abgestellt. Heutigen Ansprüchen kann aber einer Temperaturkonstanz des Bades nicht mehr genügen, die Technik ist weitgehend ausgereizt, während die vorliegende Erfindung durchaus noch höhere Spezifikationen erfüllen kann.

Als entscheidende Verbesserung im erfindungsgemäßen Verfahren ist anzusehen, dass die Temperatur nicht mehr konstant gehalten wird, sondern ihre erlaubte Veränderung unter Berücksichtigung des maximal zulässigen Schleppfehlers gemessen wird. Fehler des eingesetzten Thermometers durch unzulängliche Kalibrierung oder Langzeitdrift werden durch das Standardisieren abgefangen, sodass unmittelbar die Wasserbadtemperatur gemessen wird. Entsprechend einer **Vorrichtung** zur Durchführung des erfindungsgemäßen Verfahrens kann dann als **Lösung** für die oben ausgeführte Problematik ein Präzisionsthermometer zur direkten Messung der aktuellen Wasserbadtemperatur vorgesehen sein, das eine Langzeitstabilität von unter 1 mK pro Jahr und eine Zeitkonstante von unter 0,5 s ausweist. Das Präzisionsthermometer kann beispielsweise Platinwiderstände enthalten oder bevorzugt nach einer nächsten Erfindungsfortführung mit temperaturabhängigen Halbleiterwiderständen ausgerüstet sein. Derartige Thermometer sind außerordentlich robust und stoßunempfindlich und trotzdem hochgenau. Bei den Halbleiterwiderständen handelt es sich um sogenannte "Heißleiter" (NTC-Thermistoren), deren Widerstandswerte mit steigender Temperatur abnehmen. Einen Temperaturwahlknopf, wie ihn das bekannte AS 8400 zur Festeinstellung von einer von mehreren verschiedenen vorgegebenen Temperaturen aufweist, ist bei dem erfindungsgemäßen LRM nicht erforderlich.

Die Regelung bei dem erfindungsgemäßen Verfahren wird in einem Regelkreis realisiert, in dem der Regelparameter die ausgeglichene Bilanz der Wärmeströme in das Wasserbad und der Stellparameter ein entsprechender Wärmestrom ist. Nach einer Fortgestaltung des erfindungsgemäßen Verfahrens ist es vorteilhaft, wenn der erlaubte Maximalwert der zeitlichen Drift der Wasserbadtemperatur durch einen verzögerungsarmen und schnellen regelbaren Ausgleich der dem Wasserbad zu- und abfließenden Wärmeströme in einem solchen Maße eingehalten wird, dass der resultierende Betrag des Restwarmeflusses einen entsprechend vorgegebenen Maximalwert nicht übersteigt. Eine Kontrolle des Restwärmeflusses $P_{ges}$, der sich aus den Wärmestrom-Komponenten für Kühlen $P_K$, Heizen $P_H$, Umgebung $P_I$, Rühren $P_R$, Probe $P_P$, Messen $P_M$ und Beleuchtung $P_B$ zusammensetzt, ist einfach durchführbar und Abweichungen sind schnell und einfach ausregelbar. Einzelheiten zu den einzelnen Komponenten sind am Ende des allgemeinen Beschreibungsteils ausgeführt

Sinnvoll ist es gemäß einer nächsten Ausgestaltung bei dieser Art der Restwärme-Regelung, die Badtemperatur $\vartheta_B$ mittels des resultierenden Restwärmeflusses $P_{ges}$ ungefähr mit einer Abweichung von $\pm$ 1K auf der mittleren Umgebungstemperatur $\vartheta_L$ zu halten. Dadurch erhält man geringe Wärmeflüsse durch die Isolierung des Wasserbades. Ziel ist es, die Umgebungstemperatur $\vartheta_L$, wie sie sich ohne aufwendige Maßnahmen wie beispielsweise Raumthermostatierungen von alleine einstellt, als Führungsgröße für den Verfahrensablauf einzusetzen. Alle Regel- und Angleichvorgänge basieren so auf einer sicheren, aber einfachen Grundlage.

Geht man davon aus, dass der durch die beständige Kühlung dem Wasserbad entzogene Wärmestrom $P_K$ konstant ist und die anderen Wärmeströme nur schwer beeinflussbar oder vernachlässigbar gering sind, kann die Warmestrombilanzierung bei der Erfindung am einfachsten durch eine Veränderung des Wärmestroms $P_H$ durch kontrolliertes Heizen ausgeglichen werden. Mittels einer mittleren Heizleistung $P_{Hm}$ wird die Summe der Wärmeströme $P_{ges}$ im Mittel zu Null geregelt, damit die zulässige Temperaturdrift $\alpha_{max}$ nicht überschritten wird.

Gemäß einer Fortführung des erfindungsgemäßen Verfahrens ist es besonders vorteilhaft, wenn der Energieeintrag in das Wasserbad durch das Rühren auch zu seiner schnellen und verzögerungsarmen, regelbaren Erwärmung ausgenutzt wird. Dabei kann bei einer entsprechenden Geräteausgestaltung vorteilhaft vorgesehen sein, dass der zum Rühren und Heizen des Wasserbades vorgesehene Rührer als drehzahlsteuerbarer Rührpropeller mit einem schiffsschraubenähnlichen Rührblatt mit hohem Wirkungsgrad ausgebildet ist, der von einem stufenlos regelbaren und außerhalb des Wasserbades angeordneten Elektromotor antreibbar ist.

Das Heizen des Wasserbades wird vom Rührer durch Umwandlung von mechanischer in thermische Energie übernommen, sodass die Kühlleistung $P_K$ von der Rührleistung $P_R$ ausgeglichen werden muss und die Heizleistung $P_H$ als eigenständige Größe entfällt. Sinnvoll ist es, eine Kühlleistung zu wählen, die gleich der Summe aus der mindestens notwendigen Rührleistung zu Sicherung einer minimalen Durchmischung im Wasserbad und der Amplitude der beiden schwankenden Wärmeströme ist. Die Heizung des Wasserbades erfolgt durch die Nutzung der Reibungswärme des Rührers, die dem Wasserbad proportional zugestellt wird. Dadurch, dass die Wärme außen am Rührer und im bewegten Wasser durch innere Reibung entsteht und dadurch, dass das erwärmte Wasser vom Rührer unmittelbar verteilt wird, erzielt man jetzt eine größte Verteilung bei praktisch keiner Zeitverzögerung, da es keine Wärmekapazität und keinen Wärmewiderstand eines zusätzlichen Heizelementes mehr gibt. Ein guter hydrodynamischer Wirkungsgrad des Rührflügels ist für diesen Zweck vorteithaft.

Die daher zweckmäßig verwendete Schiffsschraube sorgt dafür, dass die am Rührer in Wärme umgesetzte Energie mit großer Geschwindigkeit homogen im Bad verteilt wird, ebenso wie die kinetische Energie des Wassers. Die Anordnung des Elektromotors außerhalb des Wasserbades verhindert einen zusätzlichen Wärmeeintrag durch die Motorerwärmung. Derartige Elektromotoren, beispielsweise auch elektronisch kommutierte Motoren vom Gleichstromtyp, sind einfach und robust. ihre Drehzahlregelung erfolgt ohne Zeitverzögerung und schnell. Bei dem bekannten Gerät AS 8400 wird die konstante Wasserbadtemperatur mittels zweier Heizlampen mit dickwandigen Glaskolben als Heizquelle, die von zwei NTC-Fühlern und einem Zweipunktregler angesteuert werden, mit einer sehr großen Zeitverzögerung eingestellt. Die Heizlampen sind deshalb als ungünstiges Bauelement für eine Temperaturregelung anzusehen.

Bei dem bekannten AS 8400 wird die ständig laufende Kühlung des Wasserbades von einem Peltierelement mit einem Luftwärmetauscher auf der warmen Seite übernommen. Eine derartige Kühlung hat aber einen relativ geringen Wärmewiderstand und ist gegen äußerere Temperaturschwankungen sehr empfindlich, In einer nächsten Fortführung des erfindungsgemäßen Verfahrens ist deshalb vorgesehen, dass der Wärmewiderstand der Außenisolierung hoch ist. Dazu kann die erfindungsgemäße Vorrichtung vorteilhaft in der Wandung des Wasserbades mindestens ein Peltierelement aufweisen, das auf seiner Kühlseite im Wasserbad eine thermische Isolation aufweist. Durch den hohen Wärmewiderstand wird der Wärmestrom $P_I$ durch die Außenhaut des Wasserbades begrenzt. Eine Analyse der Badisolierung zeigt jedoch, dass es wenig hilft, nur einfach die Wandstärke der Isolierung zu erhöhen, weil zum Wärmewiderstand der isolierten Wandung der der Wasserbadkühlung parallel liegt. Dieser setzt sich zusammen aus dem Widerstand des Peltierelements, das in der üblichen Größe einen Wärmewiderstand von 1 K/W hat, und aus dem Widerstand der dazu in Reihe geschalteten Wärmetauscher. Auf der Umgebungsseite weist der Wärmetauscher in der Regel einen sehr geringen Widerstand auf. Dadurch bewirken Temperaturänderungen der Umgebung starke Änderungen des Wärmeflusses in das Bad, die zu unzulässigen Temperaturschwankungen führen könne.

Durch diesen Weg mit geringem Wärmewiderstand bleibt der Effekt also weitgehend unabhängig von der übrigen Isolierung des Bades.

Im Allgemeinen werden die Wärmetauscher auf der Badseite mit möglichst geringem Wärmewiderstand an das Peltierelement angeschlossen, um eine möglichst große Effektivität des Kühlelements zu erreichen. Nach einer vorteilhaften Weiterführung der Erfindung ist zur weiteren Verbesserung des Wärmewiderstandes des Wasserbades gegenüber seiner Umgebung deshalb vorgesehen, dass der Wärmewiderstand der Wasserbadkühlung auf der Badseite hoch ist Es wird also bewusst eine Isolation eingeführt, was mit folgender Überlegung begründet werden Kann : Einen bestimmten Wärmefluss über einen kleinen Wärmewiderstand erreicht man mit einer entsprechend kleinen Temperaturdifferenz. Will man den gleichen Wärmefluss über einen größeren Wärmewiderstand erreichen, der das Bad besser von der Umgebung isoliert, muss man die Temperaturdifferenz erhöhen, also die kalte Seite auf niedrigerer Temperatur betreiben. Ändert sich jetzt die Raumtemperatur um einen bestimmten Wert, ändert sich die Temperatur auf der kalten Seite um etwa den gleichen Wert. Die Änderung des relativen Temperaturunterschiedes ist im Fall des hohen Wärmewiderstandes aber geringer als im Fall des niedrigen. Der Wärmefluss ändert sich entsprechend weniger, das Bad wird bei gleicher Temperaturänderung der Umgebung weniger gestört als im bekannten Betrieb, was Ziel der Ausgestaltungen ist Eine zusätzlich verbesserte Außenisolierung kann diesen Effekt noch unterstützen. Allerdings wird das nutzbare Wärmepumpvermögen des Kühlelements (Produkt aus dem gepumpten Wärmestrom und der über dem Kühlelement liegenden Temperaturdifferenz) hierbei dadurch verringert, dass der innere Wärmerückfluss größer ist. Das kann aber beispielsweise durch Parallelbetrieb von zwei Kühlelementen kompensiert werden. Ein Zahlenbeispiel zur Verdeutlichung dieser Überlegungen ist der besseren Übersicht halber erst am Ende des allgemeinen Beschreibungsteil ausgeführt, in dem relvante Größen, Zusammenhänge und Gleichungen sowie Zahlenbeispiele näher erläutert werden.

Bei dem aus dem Stand der Technik bekannten Verfahren werden während des Einlaufvorgangs die Proben und das Standardseewasser im gleichen Raum gelagert, um sie auf Raumtemperatur zu bringen. Im eigentlichen Verfahrensprozess werden die Proben in einem Wärmetauscher im Wasserbad an die Badtemperatur angeglichen. Das geschieht bei üblichen Temperaturdifferenzen zwischen Bad und Probe hinreichend genau. Aber die Wärmemenge, die bei abweichenden Temperaturen mit der Probe in das Bad eingeschleppt wird, ist nicht zu vernachlässigen. Gerade im rauen Feldbetrieb sind aber größere Temperaturunterschiede nicht zu vermeiden. Deshalb ist es nach einer nächsten Fortführung des erfindungsgemäßen Verfahrens vorteilhaft, wenn die Temperatur der Flüssigkeitsprobe in einem getrennt geregelten Vorbad der Wasserbadtemperatur angeglichen wird. Durch das Vorbad können auch Messungen mit frischen Proben ohne lange Verzögerungen für Ausgleichsmaßnahmen schnell und hochpräzise durchgeführt werden. Der große Wärmetauscher im Wasserbad wird gleichsam geteilt und ein Teil in einem kleinen Vorbad angeordnet, dessen Temperatur auf die Badtemperatur beispielsweise mit einer maximalen Abweichung von ± 0,3 K regelbar ist. Es können dann Proben verarbeitet werden, deren Temperatur bis in den Bereich von 4 K von der Badtemperatur abweichen können. Beim Austritt aus diesem Vorbad hat die Probe fast ihre gesamte überschüssige Energie abgegeben und wird im zweiten Teil des Wärmetauschers im Wasserbad ohne nennenswerten Energiefluss präzise auf die Badtemperatur angeglichen. Die Anforderungen an den Regler sind leicht zu erfüllen. Das Vorbad weist ein Kühlelement mit einem niedrigen Wärmewiderstand auf, da es nicht besonders gut von der Umgebung isoliert sein muss. Bei der geringen geforderten Regelgenauigkeit und der geringen erforderlichen Leistung kann das Kühlelement durch Stromumkehr auch zum Heizen verwendet werden.

Zur weiteren Verbesserung des bekannten Verfahrens dient weiterhin eine Erfindungsausgestaltung, nach der der Messablauf automatisch und computergestützt abläuft und der Salzgehalt der Flüssigkeitsprobe aus den gemessenen Werten für Temperatur und Leitfähigkeit nach der UNESCO-Formel berechnet wird. Der zeitliche Messablauf wird dadurch wesentlich stärker vom Gerät selbst bestimmt und damit regelmäßiger, was der Qualität der Messungen zugute kommt Bedienfehler der Geräte und im Messablauf können weitgehend vermieden werden. Die Reproduzierbarkeit der Messergebnisse wird verbessert. Eine ökonomischere Ausnutzung der erforderlichen Geräte im Dauerbetrieb ist möglich, da von der Überwachung und Bedienung weniger konzentrierte Aufmerksamkeit gefordert wird.

Eine wichtige Größe im Zusammenhang mit der Wärmestrombilanz des Wasserbades ist der Wärmeeintrag durch die Probe selbst. Beim bekannten AS 8400 erfolgt keine Vortemperierung und das Volumen der Messzelle beträgt ungefähr 15 ml. Bei einem kontinuierlichen Messablauf mit ständig neuen Messzellenfüllungen treten entsprechende Störungen der Wasserbadtemperatur und dadurch längere Ausregelzeiten auf. Deshalb ist es besser, wenn, wie in einer anderen Fortführung der erfindungsgemäßen Vorrichtung beschrieben, die Messzelle ein Volumen im Bereich von 2 ml und Streifenelektroden aufweist. Ein derartig geringes Volumen lässt wegen des geringen Volumenverhältnisses zum Wasserbad eine größere Temperaturdifferenz zu diesem zu. Das bedeutet eine weitere Vereinfachung der Vortemperierung der Probe und eine Verbesserung der Verfahrensschnelligkeit. Anstelle der bekannten Glasabzweige in der Messzelle für die Elektroden werden hier einfache Streifenelektroden verwendet, die mit Platinpaste aufgebracht und eingebrannt wurden.

Die Umsetzung der Möglichkeit einer Vortemperierung der Probe beim erfindungsgemäßen Verfahren kann nach einer nächsten Ausgestaltung der Erfindung so realisiert sein, dass ein separates regelbares Vorbad mit einem Wärmetauscher zur Temperierung der Flüssigkeitsprobe vorgesehen ist Ein solches Vorbad, beispielsweise mit einem Volumen von 0,5 l, ist ganz einfach aufgebaut und kann ohne weiteres in den LRM integriert werden. Die Kühlung erfolgt in der bekannten Weise insbesondere durch ein Peltierelement Die Heizung kann durch Stromumkehr ebenfalls mit dem Kühlelement erfolgen, sodass der Wärmetauscher sowohl zum Kühlen als auch zum Heizen eingesetzt werden kann.

Zu Beginn und Ende der Messreihe, mindestens jedoch zweimal am Tag, wird das bekannte AS 8400 standardisiert. Dazu wird eine Standard-Seewasser-Ampulle geschüttelt, geöffnet und an den Probenansaugschlauch gebracht Jetzt wird mittels einer Peristaltikpumpe die Messzelle gefüllt Durch ein Fenster kann die Messzelle beobachtet werden, um störende Luftblasen zu verhindern und um die Pumpe abschalten zu können, bevor das Probenwasser die Entlüftungskapillaren erreicht und sie verstopft. Zum Entleeren der Messzelle verschließt man mit dem Finger ein Luftloch in der Frontplatte, durch das Druckluft aus der Messzelle entweicht. Dadurch wird ein höherer Luftdruck über dem Probenwasser in der Messzelle aufgebaut, der das Probenwasser aus der Zeile durch einen Siphon drückt und damit die Messzelle leert. Die Peristaltikpumpe bleibt aber noch mit Standard-Seewasser gefüllt. Dieses Füllen und Entleeren wird zum Spülen der Zelle mehrfach wiederholt.

Entsprechend einer nächsten Ausgestaltung ist dagegen bei dem LRM zur Durchführung von Standardkalibrierungen und Messungen ein Vierwegeventil mit Zugängen zu einer Ampulle mit Standardseewasser, zu einer Flasche mit Probenwasser sowie zu einer Reinigungswasser- und einer Luftleitung vorgesehen Mit einem derartigen Vierwegeventil kann einfach zwischen den anstehenden Medien gewählt werden. Die Messzellenentlüftung erfolgt durch eine gegen Verstopfen unempfindlichere Kapillare, die Zelle kann durch die einfache Ansteuerbarkeit des Vierwegeventils automatisch befüllt werden. Zum Austreiben der Probenflüssigkeit nach der Messung ist es nach einer weiteren Ausgestaltung vorteilhaft, wenn eine Membranpumpe vorgesehen ist. Von dieser Membranpumpe, die sehr klein dimensioniert sein kann, wird nur dann Druckluft erzeugt, wenn die Zellenentlüftung über ein einfaches Zweiwegeventil mit der Membranpumpe verbunden ist Durch die Trennung der Luftströme muss Druckluft also nur solange erzeugt werden, wie sie benötigt wird. Beim Probenwechsel während des Spülens wird das ganze System einschließlich der Pumpe entleert, dadurch wird das Probenwasser gründlicher ausgetauscht und Messfehler werden verringert.

Die Verwendung einer Peristaltikpumpe erfordert bisher eine Sichtkontrolle des Füllungszustandes der Messzelle. Ein wichtiger Schritt zur Automatisierung der Messungen stellt aber eine automatische Befüllung mit einer Flüssigkeitsmenge dar, die die Messzelle sicher füllt. Deswegen ist es vorteilhaft, wenn nach einer weiteren Erfindungsausgestaltung zum Befüllen der Messzelle eine Dosierpumpe vorgesehen ist, die nicht direkt beobachtet werden muss. Hierbei kann es sich jedoch auch um eine Peristaltikpumpe handeln, da die Entlüftung beim LRM nicht mehr so empfindlich ist wie beim bekannten AS 8400, sodass auch ein leichtes Überfüllen der Messzelle nicht schadet. Der Einsatz eines optischen Füllstandsfühlers ist ebenfalls möglich.

Als weitere Verbesserungen können bei dem erfindungsgemäßen LRM verschiedene Maßnahmen realisiert sein, insbesondere, dass ein PC- zur Wasserbadregelung, Messablaufsteuerung und Ergebnisspeicherung vorgesehen ist, dass die Leitfähigkeitsmessung der Flüssigkeitsprobe an einer vollautomatisch selbstabgleichenden Präzisionsbrücke erfolgt und dass eine Anzeige für die Erfüllung der Messbedingungen vorgesehen ist Bei dem bekannten AS 8400 erfolgen die Einstell-, Abgleich und Standardisierungsvorgänge manuell über entsprechende Vorrichtungen, Knöpfe und Potentiometer. Das LRM besitzt keine Potentiometer. Es wird lediglich einmal der sogenannte "$K_{15}$-Wert" der Standard-Seewasser-Ampulle eingegeben und drei genügend übereinstimmende Messungen der Leitfähigkeit des Standard-Seewassers vorgenommen. Dabei bezeichnet der $K_{15}$-Wert das Leitfähigkeitsverhältnis bei 15°C und Normaldruck, bezogen auf eine bestimmte Kaliumchloridlösung als primäres Normal, deren Konzentration so festgelegt wurde, dass sie die gleiche Leitfähigkeit wie Standardseewasser bei 15°C hat. Der Brückenabgleich erfolgt an allen Stellen automatisch. Der Salzgehalt wird aus der im Wasserbad gemessenen Temperatur, deren Äquivalenz mit der Probentemperatur vorausgesetzt wird, und der Leitfähigkeit nach der UNESCO-Formel berechnet. Beim Standardisieren wird der Formfaktor der Messzelle zusammen mit einem möglichen Kalibrierfehler des Präzisionsthermometers bestimmt. Der zeitliche Messablauf wird gegenüber dem bekannten Gerät wesentlich stärker vom Gerät selbst bestimmt und damit regelmäßiger, was der Qualität der Messungen zugute kommt Die Standard-Seewässer-Ampulle verbleibt am Gerät, der Probenschlauch wird nicht gewechselt und kann das Standard-Seewasser nicht verschmutzen. Ein zum Messen ungeeigneter Betriebszustand, beispielsweise eine zu große Temperaturdrift im Wasserbad, wird bei dem erfindungsgemäßen LRM auf einer entsprechenden Anzeige angezeigt. Insgesamt gesehen kann das LRM fast vollständig aus marktgängigen Komponenten zusammengestellt werden, was als besonders kostengünstig und wartungsfreundlich anzusehen ist.

**Erläuterungen zu den Grundlagen bei der Erfindung, Zahlenbeispiele**

**I) Nachweis der Äquivalenzannahme zwischen Proben- und Wasserbadtemperatur**

Die Wasserbadtemperatur ändert sich mit

$$(1) \qquad \frac{dT_B}{dt} = \frac{1}{C_B} P_B$$

mit $\quad C_B \qquad \rightarrow$ Wärmekapazität
$\quad P_B \qquad \rightarrow$ resultierender Wärmefluss
$\quad T_B \qquad \rightarrow$ Wasserbad-Temperatur

Das Zeitverhalten der Wasserbadtemperatur bei konstanter, aber nicht ganz ausgeglichener Bilanz des Wärmeflusses ist

$$(2) \qquad T_B = \alpha t + T_0$$

mit

$$\alpha = \frac{dT_B}{dt}$$

$\rightarrow$ zeitliche Änderung der Badtemperatur: Drift
$\quad T_0 \qquad \rightarrow$ Badtemperatur zur Zeit $t_0$

Voraussetzung für die Äqivalenzrechnung ist, dass das Zeitverhalten der Messzelle und des Thermometers als Differentialgleichung erster Ordnung dargestellt werden kann

$$(3) \qquad T_M = \tau_M \frac{dT_M}{dt} = \alpha t + T_0$$

mit $\quad \tau_M = R_T \cdot C_T \quad \rightarrow$ Zeitkonstante des Thermometers
$\quad T_M \qquad \rightarrow$ gemessene Temperatur
mit $\quad R_T \qquad \rightarrow$ thermischer Widerstand Wasserbad - Thermometer
$\quad C_T \qquad \rightarrow$ Wärmekapazität des Thermometers

Die Lösung der Differentialgleichung unter Hinzufügung eines Terms für den Kalibrierfehler lautet

$$(4) \qquad T_M = T_0 + \alpha t - \alpha \tau_M \left( 1 - e^{-\frac{t}{\tau_M}} \right) + \Delta T_M$$

mit $\quad \Delta T_M \qquad \rightarrow$ Kalibrierfehler

Für Zeiten $t \gg \tau_M$ ist $T_M = T_B - \alpha \tau_M$
Die größte Abweichung zwischen Thermometeranzeige und Temperatur der Messzelle ist

$$(5) \qquad T_M - T_{MC} = \alpha (\tau_M - \tau_{MC}) + \Delta T_M$$

mit $T_{MC} \qquad \rightarrow$ Temperatur der Messzelle
$\quad \tau_{MC} \qquad \rightarrow$ Zeitkonstante der Messzelle

Der zeitliche Verlauf der Differenz der Temperaturen zwischen Thermometer und Messzelle ist

$$(6) \quad T_M - T_{MC} = \alpha \left[ \tau_M \left( 1 - e^{-\frac{t_1}{\tau_M}} \right) - \tau_{MC} \left( 1 - e^{-\frac{t_1}{\tau_{MC}}} \right) \right] + \Delta T_M$$

mit $\quad t_1 \quad \rightarrow$ Messzeitpunkt 1

Der Klammerausdruck ist immer zwischen 0 und 1.

Der Anstieg der Wasserbadtemperatur sei angenommen mit gerade

$$\alpha_{max} = \frac{\alpha}{1 - e^{\frac{t_1}{T_M}}}$$

mit einem Nenner immer $\leq 1$ folgt $\alpha_{max} \geq \alpha$

und eingesetzt in (6)

$$(7) \quad T_M - T_{MC} = \alpha_{max} \left[ \tau_M - \tau_{MC} \frac{1 - e^{-\frac{t_1}{\tau_{MC}}}}{1 - e^{-\frac{t_1}{\tau_M}}} \right] + \Delta T_M$$

Da die Zeitkonstante des Messzelle etwa um den Faktor 100 größer ist als die des Thermometers, ist mit $\tau_{MC} > \tau_M$ der Nenner des Bruchs immer kleiner als der Zähler, sodass die Temperaturdifferenz immer unter der höchstzulässigen Grenze aus (5) bleibt. Die Äquivalenzvoraussetzung der Temperaturen zwischen Probe und Wasserbad ist damit nachgewiesen.

Die Wasserbadtemperatur ist in dem Beispiel schneller gestiegen als mit $\alpha_{max}$ vereinbart, aber die Anzeige des schnelleren Thermometers übersteigt diesen Grenzwert zunächst nicht, die Messung mit der langsameren Messzelle wird also nicht gestört. Erst wenn dieser Zustand länger andauert, wird das Thermometer und schließlich auch die Messzelle einen unzulässigen Temperaturanstieg verzeichnen. Bei Umkehrung der Driftverhältnisse muss natürlich nach Wiederherstellung der zulässigen Bedingungen bei der Anzeige des Thermometers noch eine definierbare Zeit bis zur Wiederherstellung der Messbedingungen an der Messzelle gewartet werden. Die Feststellung der Einhaltung der Messbedingungen obliegt bei der automatischen Messung dem steuernden Rechner.

## II) Schleppfehler, Temperaturdrift

Ein Anstieg der Wasserbadtemperatur $\vartheta_B$ unter Einfluss einer zeitlich konstanten eingeprägten Größe verläuft zeitlinear (analog zu kapazitiven Schaltkreisen mit den eingeprägten Größen Strom und Spannung). Die Zeitkonstante des Messaufnehmers (0,1s) ist in der Regel sehr klein und kann gegenüber einer Zeitkonstanten $\tau$ der Messzelle, die beim AS 8400 im Bereich von 28 s liegt, vernachlässigt werden, selbst wenn z.B. nur alle 2 s ein Messwert aufgenommen wird. Die Zeitkonstante $\tau$ bezeichnet das Produkt aus Wärmewiderstand des Glaskörpers der Messzelle und der Wärmekapazität der eingefüllten Probe. Sie ist als Zeitverzögerung das Maß für die größte erlaubte Zeitdistanz zwischen dem Befüllen der Messzelle und der ersten Temperaturmessung eine Eigenschaft der gefüllten Messzelle und wird beim Bau des Geräts einmal experimentell bestimmt.

Der Schleppfehler errechnet sich aus :

$$\Delta\vartheta = (d\,\vartheta_B\,/\,dt)\,\tau$$

Daraus kann die Temperaturdrift abgeleitet werden zu :

$$\alpha = d\vartheta_B\,/\,dt = \Delta\vartheta\,/\,\tau$$

Gibt man nach den oben genannten Voraussetzungen einen maximal zulässigen Schleppfehler $\Delta\vartheta_{max}$ = 0,3 mK bei einer Zeitkonstanten $\tau$ = 28 s der Messzelle vor, ergibt sich aus der zweiten Gleichung damit eine maximal erlaubte Drift $\alpha_{max} = \Delta\vartheta_{max}/\tau$ = 10 µK/s. Hierbei handelt es sich um eine Betragsangabe, die sowohl für positive als auch für negative Temperaturveränderungen gilt. Eine maximal erlaubte Temperaturdrift $\alpha_{max}$ von 10 µK/s der Wasserbadtemperatur $\vartheta_B$ ist also bei diesen als Beispiel angenommenen Vorgaben tolerabel und führt nicht zu einem Regelausgleich. Wenn die Temperaturdrift $\alpha$ nur kurze Zeit anhält, würde der Schleppfehler $\Delta\vartheta$ natürlich kleiner als 0,3 mK bleiben. Bei beispielsweise einem maximal zulässigen Schleppfehler $\Delta\vartheta_{max}$ von 0,1 mK und einer Zeitkonstante $\tau$ von 15 s ergibt sich für die maximal erlaubte Temperaturdrift $\alpha_{max}$ ein Wert von ungefähr 7 µK/s.

Nach einer Zeit $t_v$ nach dem Befüllen der Messzelle mit der zum Temperaturangleich vortemperierten Flüssigkeitsprobe wird deren Leitfähigkeit gemessen. Ist in dieser Zeit die Badtemperatur $\vartheta_B$ mit der maximal erlaubten Drift $\alpha_{max}$ gestiegen, so herrscht zwischen Bad- und Probentemperatur zur Zeit der Messung ein Schleppfehler von

$$\Delta\vartheta_V = \alpha_{max} \cdot t_V.$$

Damit ergibt sich in Fortführung des zuerst genannten Zahlenbeispiels als maximales Zeitintervall $t_{Vmax} = \Delta\vartheta_{max} / \alpha_{max}$ zwischen Befüllen und Messen eine Zeit von 30 s, die jedoch leicht eingehalten werden kann. Der durch diese Zeitverzögerung hervorgerufene Fehler addiert sich nicht zum aktuellen Schleppfehler, er sollte aber kleiner als der maximal zulässige Schleppfehler veranschlagt werden.

### III) Wärmeströme

Bei den dem Wasserbad zu- und abfließenden Wärmeströmen handelt es sich im einzelnen um

- den Wärmestrom $P_K$, der durch die Kühlung aus dem Wasserbad gepumpt wird,
- den Wärmestrom $P_H$, der durch die Heizung in das Wasserbad eingebracht wird,
- den Wärmestrom $P_I$, der durch die über dem Wärmewiderstand der Wasserbadisolierung anliegende Temperaturdifferenz zwischen der Umgebung und dem Wasserbad erzeugt wird, mit **$P_I = (\vartheta_B - \vartheta_L) / R_{WI}$**,
- den Wärmestrom $P_R$, der durch das Umrühren in das Wasserbad eingebracht wird,
- den Wärmestrom $P_p$, der von der Probe, die kontinuierlich neu in die Messzelle einfüllbar ist, in das Wasserbad eingebracht wird, wenn ihre Temperatur von der Wasserbadtemperatur abweicht, mit **$P_P = C_W V/t (\vartheta_P - \vartheta_B)$** (V/t = mittlerer Volumenstrom bei der Einfüllung).
- den Wärmestrom $P_M$, der durch die elektrische Leistung der Messfühler in das Wasserbad eingebracht wird, und
- den Wärmestrom $P_B$, der durch eine Beleuchtung in das Wasserbad eingebracht wird. Dieser kann in der Regel vernachlässigt werden.

Eine möglichst gute Abdeckung des Bades nach oben hin sorgt dafür, dass kein zusätzlich zu berücksichtigender Wärmestrom durch Verdunstung oder Kondensation der Raumluftfeuchte auftritt. Die Kühlleistung $P_K$ wird als konstant bei konstantem Strom durch das Kühlelement angenommen, obwohl sein Wärmepumpvermögen auch etwas von der Temperaturdifferenz zwischen warmer und kalter Seite abhängt. Der Wärmestrom durch die Isolierung des Badgefäßes $P_I$ ist der Temperaturdifferenz zwischen dem Inneren und der Umgebung proportional und zählt damit zu den variablen Größen, ebenso wie die Wärme, die von Proben mit abweichender Temperatur in das Bad getragen werden. Diese wird zu einem pulsierenden Wärmestrom durch regelmäßiges erneutes Füllen der Messzelle mit dem mittleren Volumenstrom V/t. Die elektrische Leistung, die durch die Messfühler in das Bad gebracht wird, ist für seine Temperatur zu vernachlässigen.

In Analogie zum Ohmschen Gesetz beschreibt ein Wärmewiderstandsgesetz die Temperaturdifferenz $\Delta\vartheta$ über einen Wärmewiderstandes $R_T$, durch den ein Wärmestrom $P_W$ fließt, zu :

$$\Delta\vartheta = R_T \cdot P_W$$

Fließt ein Wärmestrom $P_W$ in einen Körper mit der Wärmekapazität $C_W$, so ändert sich dessen Temperatur $\vartheta$ gemäß :

$$d\vartheta/dt = P_W/C_W$$

Hiermit verändert die Summe der genannten Wärmeströme die Wasserbadtemperatur zu :

$$d\vartheta_B/dt = 1/C_W\,(P_K + P_H + P_I + P_R + P_P + P_M)$$

**IV) Wärmewiderstand**

Der Wärmewiderstand für ein Peltierelement der Größe 40 mm x 40 mm kommt über 1 K/W nicht hinaus. Die Wandisolierung habe jetzt eine Widerstand von 1,5 K/W, der Gesamtwiderstand liegt also bei 0,6 K/W und kann durch eine noch so gute Wandisolierung nur auf 1 K/W gesteigert werden. Dagegen erhöht die Isolierung des Peltierelements auf der Badseite durch eine 3 mm starke PVC-Platte der Größe 40 mm x 80 mm seinen Wärmewiderstand auf 7 K/W. Die Raumseite wird aber weiterhin durch einen großen Kühlkörper und intensiven Lüfter so gut wie möglich auf Raumtemperatur gehalten. Jetzt beträgt der Gesamtwärmewiderstand 1,2 K/W. Diese zusätzliche Isolierung des Peltierelements beschränkt allerdings den aus dem Bad pumpbaren Wärmestrom auf etwa 5 W, weil die Temperaturdifferenz über der Isolationsplatte 6 K/W· 5 W = 30 K beträgt. Wenn im Bad eine Temperatur von 20 °C herrscht, befindet sich die kalte Seite des Peltierelements auf -10 °C, während sich seine warme Seite, bedingt durch den Wärmewiderstand des Kühlkörpers, auf etwa 25 °C befindet Um bei einer Temperaturdifferenz von 35 K noch einen Wärmestrom von 5 W pumpen zu können, ist daher gegebenenfalls ein Parallelbetrieb von zwei oder mehreren Peltierelementen erforderlich.

**Ausbildungsformen der Erfindung** zum weiterführenden Verständnis des erfindungsgemäßen Verfahrens zur Bestimmung des Salzgehaltes von Flüssigkeiten und einer Vorrichtung zur Verfahrensdurchführung werden nachfolgend anhand der schematischen Figuren näher erläutert.
Dabei zeigt:

**Figur 1**    ein Flussdiagramm für das erfindungsgemäße Verfahren,
**Figur 2**    ein Energieschema für eine Störgrößenausregelung mit dem jetzt verwendeten Regelparameter "Temperaturdrift" und zum Vergleich mit dem bekannten Regelparameter "Temperatur" und
**Figur 3**    ein Blockschema für eine Vorrichtung zur Durchführung des erfindungsgemäßen Verfahrens.

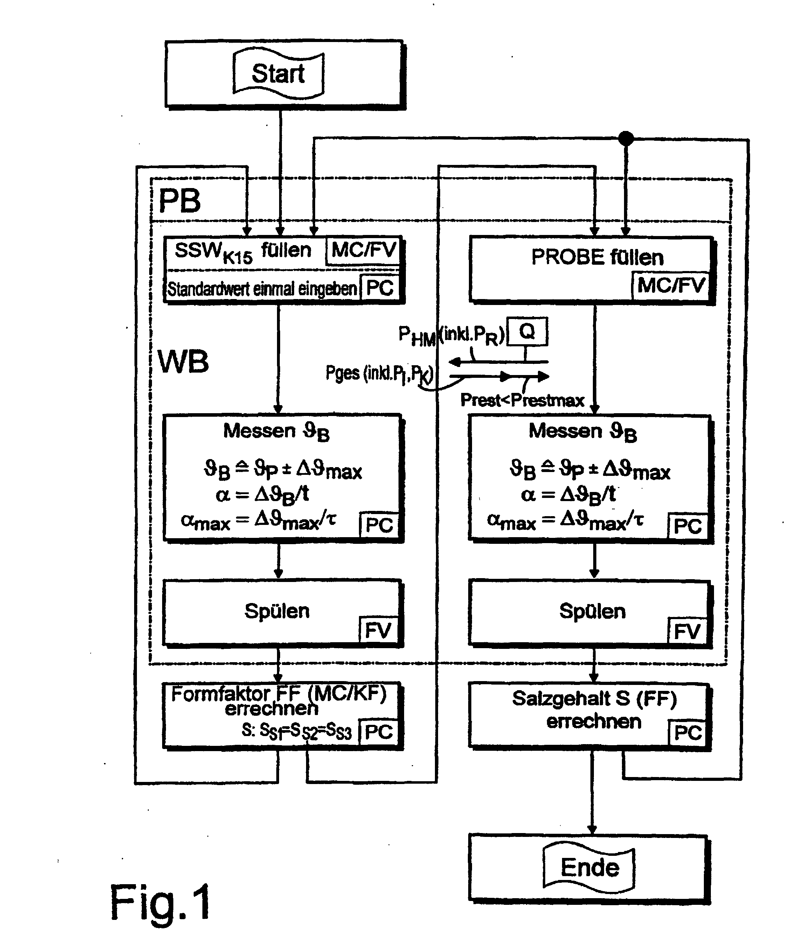

In **Figur 1** sind die für das erfindungsgemäße Verfahren typischen Schritte in einem Wirkfluss dargestellt. Zunächst wird mit Standard-Seewasser **SSW** mit dem $K_{15}$-Wert eine Standard-Kalibrierung durchgeführt. Der Kalibrierdurchlauf entspricht in seinem Ablauf dem unten beschriebenen eigentlichen Messdurchlauf. Haben drei Messungen des Salzgehaltes **S** hintereinander den gleichen Wert $S_{S1} = S_{S2} = S_{S3}$, dann ist der Kalibriervorgang erfolgreich abgeschlossen. Der Brückenabgleich erfolgt selbsttätig. Eine Statusmeldung und das Ergebnis werden an einen **PC** weitergegeben. Gleichzeitig wird beim Kalibrieren der Formfaktor **FF** der Messzelle **MC** und ein gegebenenfalls vorhandener Kalibrierfehler **KF** eines verwendeten Thermometers implizit berücksichtigt. Solange die Messfehler klein sind, ist ihre Zusammenfassung in einem Formfaktor zulässig.

Im anschließenden Messdurchlauf wird eine PROBE zunächst durch ein heizund kühlbares Vorbad **PB** zur Anpassung der Probentemperatur $\vartheta_P$ an die Badtemperatur $\vartheta_B$ und danach in eine Messzelle **MC** geleitet, die in einem größeren Wasserbad **WB** angeordnet ist In der Messzelle **MC** wird die elektrische Leitfähigkeit $\kappa$ gemessen und der Wert dem **PC** zugeleitet. Danach wird die Messzelle **MC** über Druckluft geleert, mit destilliertem Wasser gereinigt und mit einer neuen **PROBE** befüllt. Die Verteilung der einzelnen Stoffflüsse erfolgt Ober ein vom **PC** steuerbares Vierwegeventil **FV**. Der Messdurchlauf kann ständig wiederholt werden. In bestimmten Zeitabständen wird automatisch ein erneuter Kalibrierungsvorgang eingeschoben.

Während der Messung der elektrischen Leitfähigkeit $\kappa$ wird ständig die Badtemperatur $\vartheta_B$ gemessen und daraus vom **PC** unter Berücksichtigung der Zeit **t** zwischen zwei Messungen eine Temperaturdrift $\alpha$ berechnet. Dabei wird zulässig vorausgesetzt, dass die Badtemperatur $\vartheta_B$ mit der Probentemperatur $\vartheta_P$ in der Messzelle **MC** bis auf einen beliebig klein vorgebbaren Schleppfehler $\Delta\vartheta$ übereinstimmt. Der Betrag der Temperaturdrift $\alpha$ muss unterhalb eines vorgegebenen erlaubten Maximalwerts $\alpha_{max}$ liegen, um keinen Regelausgleich hervorzurufen. Kurz vor Erreichen des erlaubten Maximalwerts $\alpha_{max}$ der Temperaturdrift wird automatisch über einen Rührpropeller **Q** ein mittlerer Wärmestrom $P_{Hm}$ (einschließlich der kinetischen Rührerleistung $P_R$) zur Ausregelung des gesamten, das Wasserbad beeinflussenden Wärmestroms $P_{ges}$ einschließlich des Wärmestroms aus der Umgebung $P_I$ und einer Kühlleistung $P_K$ bis auf einen Restwärmestrom $P_{rest}$ verändert. Der Restwärmestrom $P_{rest}$ darf einen vorgegebenen, maximalen Restwärmestrom $P_{restmax}$ nicht überschreiten. Ansonsten greift die Regelung ein.

Der Regelparameter ist also die Temperaturdrift $\alpha$, die in Bezug zu der vorgegebenen maximal erlaubten Temperaturdrift $\alpha_{max}$ gesetzt wird. Die maximal erlaubte Temperaturdrift $\alpha_{max}$ berechnet sich als Quotient aus dem vorgegebenen maximal zulässigen Schleppfehler $\Delta\vartheta_{max}$ zwischen Bad- und Probentemperatur $\vartheta_B$, $\vartheta_P$ und der beim Bau der Messzelle **MC** ermittelten Zeitkonstanten $\tau$ ($\alpha_{max} = \Delta\vartheta_{max}/\tau$). Die Stellgröße im Regelkreis ist die Heizleistung $P_H$, die über den Rührpropeller **Q** in das Wasserbad **WB** eingebracht wird, und die Störgröße ist die Summe aller auftretenden Wärmeströme $P_{ges}$.

Aus den gemessenen Werten für die Temperatur $\vartheta_B$ des Wasserbades **WB** und für die Leitfähigkeit $\kappa$ der eingefüllten **PROBE** wird abschließend mit einem in der Ozeanographie gebräuchlichen Rechenprogramm nach der UNESCO-Formel der Salzgehalt **S** der PROBE berechnet Der berechnete Wert und Störungen im Verfahrensablauf werden optisch angezeigt.

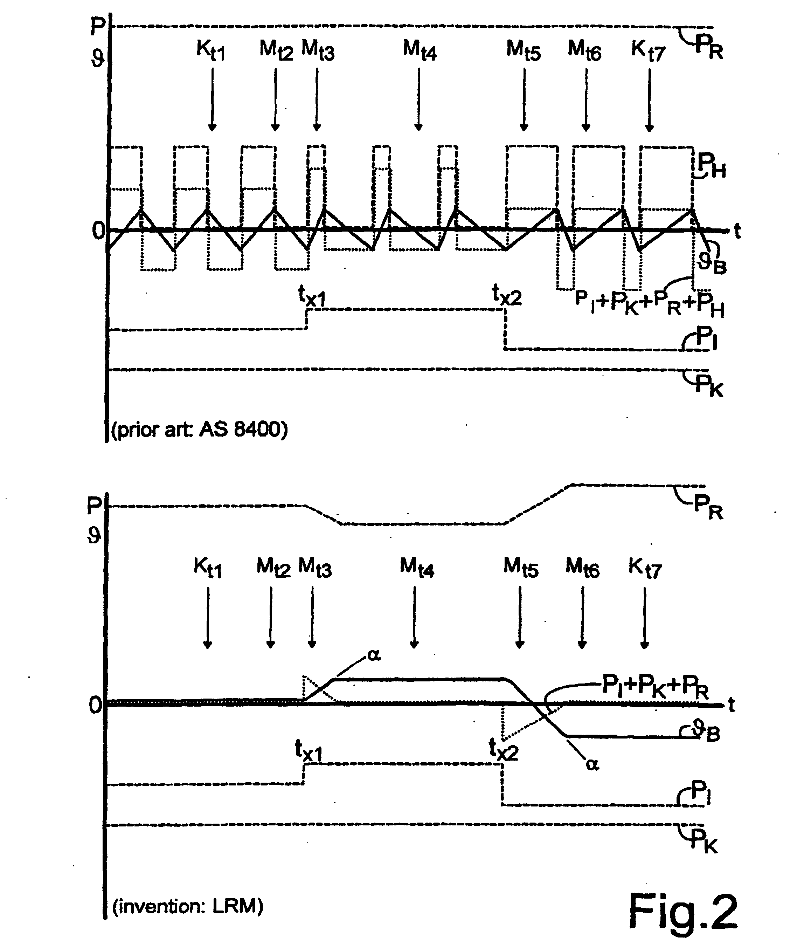

Der **Figur 2** ist ein zum jeweiligen Regelvorgang gehöriges Energieschema zu entnehmen. Um die beim erfindungsgemäßen Verfahren mit dem **LRM** optimale Energiebilanz (in der Figur unten) zeigen zu können, ist zum Vergleich auch die Energiebilanz bei dem bekannten Verfahren mit dem **AS 8400** dargestellt (in der Figur oben). Ober einer Zeitachse **t** sind die Wärmeströme in das Wasserbad und die Wärmeströme aus dem Wasserbad als Flächen bis zu Grenzkurven dargestellt. Zu Zeitpunkten $t_{X1}$ und $t_{X2}$ treten sprungartig größere Störungen durch Wärmeflüsse $P_I$ aus der Umgebung ein, die eine Ausregelung erforderlich machen. Beispielsweise tritt zum Zeitpunkt $t_{X1}$ ein Mensch als Wärmequelle an das Wasserbad, zum Zeitpunkt $t_{X2}$ wird eine Tür geöffnet und Wärme kann aus dem Raum entweichen. Bei beiden Regelverfahren ist die Kühlleistung immer konstant Bei **AS 8400** ist auch die Rührerleistung $P_R$ konstant und eine zusätzliche Heizleistung $P_H$ tritt auf. Diese wird durch zweipunktgeregelte Heizlampen eingebracht Beim **LRM** erfolgt die Ausregelung der Störung durch eine zur Rührerleistung $P_R$ zusätzliche Heizleistung $P_H$ durch die steuerbare Drehzahlregelung des Rührerquirls **Q**. Deutlich ist beim **AS 8400** der sägezahnartige Verlauf der Wasserbadtemperatur $\vartheta_B$ zu erkennen, der darauf ausgerichtet ist, eine konstante Wasserbadtemperatur $\vartheta_B$ als Regelparameter einzuhalten. Dagegen zeigt die Wasserbadtemperatur $\vartheta_B$ beim **LRM** einen weitgehend kontinuierlichen Verlauf. Sofern die Temperaturdrift $\alpha$ ihren zulässigen Maximalwert nicht überschreitet ist eine weitere Anpassung der Rührerleistung $P_R$ nicht erforderlich. Die bekannt aufwendige Konstanthaltung der Badtemperatur $\vartheta_B$ entfällt beim **LRM**. Bei den eingetragenen Zeitpunkten für Kalibrierungen $K_{t1}, K_{t7}$ und Messungen $M_{t2}..M_{t6}$ ist deutlich zu sehen, wie sehr die Wasserbad- bzw. Probentemperatur $\vartheta_B, \vartheta_P$ beim Stand der Technik von der implizit vorausgesetzten Temperatur abweichen kann, während sie beim erfindungsgemäßen Verfahren jedesmal bis auf den maximal zulässigen Schleppfehler $\Delta\vartheta_{max}$ gemessen wird und direkt in die Formelberechnung des Salzgehaltes **S** eingeht. Die dadurch erreichte sehr viel höhere Messgenauigkeit ist offensichtlich.

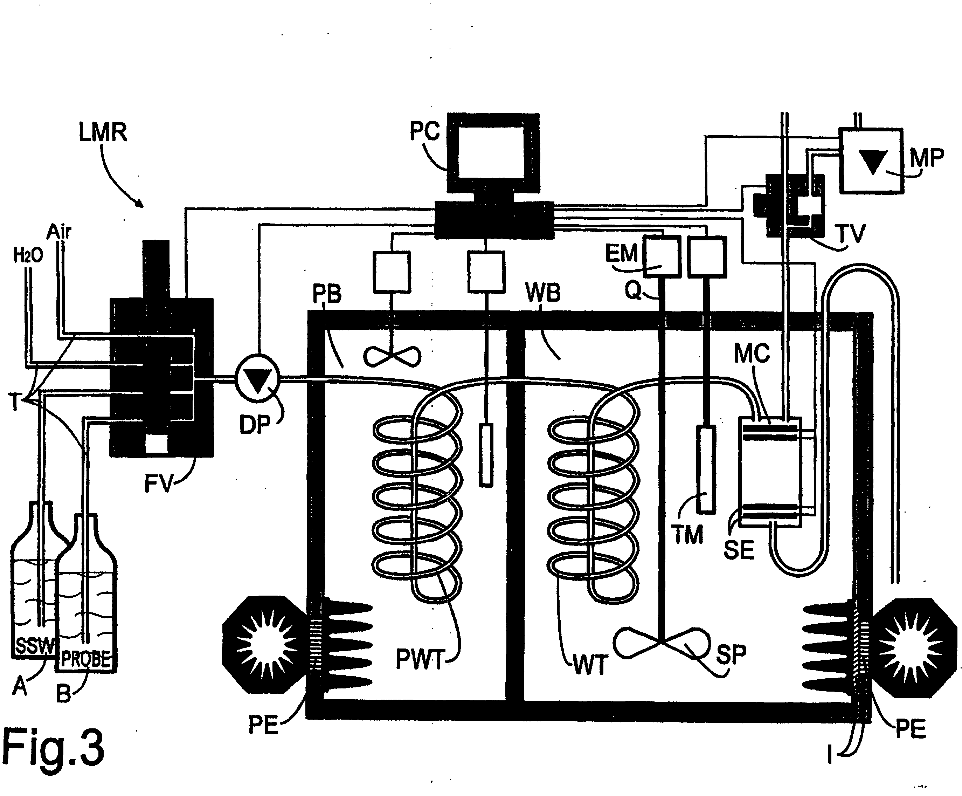

In **Figur 3** ist ein Leitfähigkeits-Referenz-Messplatz **LRM** als bevorzugte Anordnung zur Durchführung des erfindungsgemäßen Verfahrens dargestellt. Das **LRM** weist ein Wasserbad **WB** und ein separates Vorbad **PB** auf. Im Vorbad **PB**, das über ein Peltierelement **PE** sowohl heiz- als auch kühlbar ist, befindet sich ein Vorwärmetauscher **PWT** zum Temperaturangteich zwischen einer **PROBE**, die aus einer Probenflasche **B** entnommen wird (oder Standard-Seewasser **SSW** zur Kalibrierung aus einer Ampulle **A**), und dem Wasserbad **WB**. Im Wasserbad **WB** ist hinter einem Hauptwärmetauscher **WT** eine Messzelle **MC** angeordnet. Diese weist vier Streifenelektroden **SE** zur Messung der veränderlichen Strom- und Spannungsgrößen auf. Fast alle Stofflflüsse werden von einer Dosierpumpe **DP** gefördert und strömen über Schläuche **T** Ober ein Vierwegeventil **FV** als Verteiler. Zur Entleerung der Messzelle **MC** erforderliche Druckluft wird von einer Membranpumpe **MP** bedarfsweise erzeugt und über ein Zweiwegeventil **TV** in die Messzelle **MC** geschleust. In der Messzelle **MC** wird von einem **PC**, mit dem der gesamte Verfahrensablauf automatisch gesteuert wird, an einer nicht weiter dargestellten vollautomatisch selbstabgleichenden Präzisionsbrücke die elektrische Leitfähigkeit $\kappa$ gemessen. Weiterhin sind im Wasserbad **WB** ein Präzisionsthermometer **TM** zur Messung der Wasserbadtemperatur $\vartheta_B$ und ein drehzahlregelbarer Rührpropeller **Q** mit einem Schiffsschraubenpropeller **SP** zur Regelung der Temperaturdrift $\alpha$ über die mittlere eingebrachte Heizleistung $P_{Hm}$ angeordnet. Im dargestellten Ausführungsbeispiel handelt es sich um das kommerziell erhältliche Thermometer "SBE3plus" der Firma "Seabird", das aufgrund seiner Stabilität weniger als 1 mK über ein Jahr driftet und die gestellten Anforderungen problemlos bewältigt. Der Rührporpeller **Q** hat einen außerhalb des Wasserbades angeordneten Elektromotor **EM** und arbeitet gegen ein beständig kühlendes Peltierelement **PE**, das zur Erhöhung des Wärmewiderstandes **R** ebenso wie das Wasserbad **WB** mit einer Isolierung I versehen ist.

Im gewählten Ausführungsbeispiel hat der Rührpropeller **Q** einen Leistungsbereich zwischen 3 W und 5 W und damit einen Arbeitspunkt bei 4 W. Unter Berücksichtigung der Beziehung zwischen Temperatur und Wärmestrom ($d\vartheta/dt = P/C_W$) und der vorgegebenen Grenz- und Materialwerte kann dann die Wärmestrombilanz mit $\pm 1$ W ausgeglichen werden. Wenn man 0,5 W für den Probenwärmestrom $P_P$ reserviert, darf die Umgebungstemperatur $\vartheta_L$ jetzt 1 K von der Wasserbadtemperatur $\vartheta_B$ abweichen, ohne dass die Temperaturdrift $\alpha$ unzulässig hohe Werte annimmt. Bei diesen Werten ergibt sich ein Gesamtwärmewiderstand von 2 K/W. Wenn die Isolierung I von Peltierelement **PE** und Wärmetauscher **WT** einen Widerstand von 7 K/W hat, wird für die Badisolierung ein Widerstand von 2,8 K/W gefordert. Dazu muss gegebenenfalls der Widerstandswert entsprechend erhöht werden.

Aus der oben genannten Beziehung kann unter Vorgabe der maximal zulässigen Temperaturdrift $\alpha_{max} = d\vartheta/dt$ und Kenntnis der resultierenden Wärmekapazität $C_{WB}$ des Wasserbades **WB** $(V_W$ -$C_{WS})$ der tolerierbare Restfehler des auszubalancierenden Wärmestroms $P_{rest}$ errechnet werden. Beispielsweise ergibt sich für ein $\alpha_{max} = 7$ µK/s und ein $C_{WB} = 67 \cdot 10^3$ Ws/K für ein Wasserbad mit $V_W = 16$ I Volumen bei einem spezifischen $C_{WS}$-Wert für Wasser von $4,2 \cdot 10^3$ Ws/(1K) eine Leitung $P_{rest} = 0,47$ W. Bei einem verbesserten Wärmewiderstand $R_{WI} = 1,2$ K/W des Wasserbades kann gemäß der Beziehung $\Delta\vartheta = R \cdot P$ jetzt die Umgebungstemperatur $\vartheta_L$ um 0,56 K von der Badtemperatur $\vartheta_B$ abweichen, ohne dass die Regelung eingreifen müsste.

**EP 1 190 240 B1**

**Formel- und Bezugszeichenliste**

| | |
|---|---|
| **A** | Ampulle |
| **B** | Probenflasche |
| **C$_{WB}$** | Wärmekapazität des Wasserbades |
| **C$_W$** | Wärmekapazität |
| **C$_{WS}$** | spezifische Wärmekapazität |
| **DP** | Dosierpumpe |
| **EM** | Elektromotor |
| **FF** | Formfaktor |
| **I** | Isolierung |
| **K$_{15}$** | Standard-Wert |
| **KF** | Kalibrierfehler |
| **K$_{t1/2}$** | Kalibrierzeitpunkte |
| **LRM** | Leitfähigkeits-Referenz-Messplatz |
| **M$_{t2..6}$** | Messzeitpunkte |
| **MC** | Messzelle |
| **MP** | Membranpumpe |
| **PB** | Vorbad |
| **PC** | Personal Computer |
| **PE** | Peltierelement |
| **P$_{ges}$** | gesamter Wärmestrom |
| **P$_H$** | Heizleistung |
| **P$_{Hm}$** | mittlerer Heizwärmestrom |
| **P$_I$** | Wärmestrom aus der Umgebung |
| **P$_K$** | Kühlleistung |
| **P$_P$** | Wärmestrom durch die Probe |
| **P$_R$** | kinetische Rührleistung |
| **P$_{rest}$** | Restwärmestrom |
| **P$_{restmax}$** | maximaler Restwärmestrom |
| **P$_W$** | Wärmestrom |
| **PROBE** | Flüssigkeitsprobe |
| **PWT** | Vorwärmetauscher |
| **Q** | Rührpropeller |
| **R** | Wärmewiderstand |
| **S** | Salzgehalt |
| **S$_{S1,S2,S3}$** | Einzelmessung |
| **SE** | Streifenelektrode |
| **SP** | Schiffsschraubenpropeller |
| **SSW** | Standard-Seewasser |
| **t** | Zeit |
| **T** | Schlauch |
| **TM** | Thermometer |
| t$_V$ | Zeitintervall Füllen/Messen |
| **TV** | Zweiwegeventil |
| **FV** | Vierwegeventil |
| **WB** | Wasserbad |
| **WT** | Wärmetauscher |
| $\vartheta_P$ | Probentemperatur |
| $\vartheta_B$ | Badtemperatur |
| $\Delta\vartheta_{max}$ | maximal zulässiger Messfehler |
| $\alpha$ | Temperaturdrift |
| $\alpha_{max}$ | maximal erlaubte Temperaturdrift |
| $\kappa$ | elektrische Leitfähigkeit |

$\tau$     Zeitkonstante der Messzelle

**Patentansprüche**

1. Verfahren zur Bestimmung des Salzgehaltes von Flüssigkeiten durch standardkalibrierte Messungen der elektrischen Leitfähigkeit einer temperierten Flüssigkeitsprobe in einer Messzelle, die in einem beständig gekühlten und mechanisch gerührten sowie heizbaren und nach außen isolierten Wasserbad angeordnet ist, unter regelparametrischer Berücksichtigung der thermischen Verhältnisse im Wasserbad,
   **dadurch gekennzeichnet, dass**
   die aktuelle Wasserbadtemperatur ($\vartheta_B$) als Äquivalent für die Probentemperatur ($\vartheta_P$) mit einer hohen Wiederholgenauigkeit gemessen wird unter Einbeziehung eines von der geforderten Genauigkeit bei der Salzgehaltsbestimmung (S) festgelegten maximal zulässigen Schleppfehlers ($\Delta\vartheta_{max}$) zwischen Wasserbad- und Probentemperatur ($\vartheta_B$, $\vartheta_P$) und dass der Regelparameter für die Berücksichtigung der thermischen Verhältnisse die aus den Temperaturmessungen ableitbare zeitliche Drift ($\alpha = \Delta\vartheta_B/t$) der Wasserbadtemperatur ($\vartheta_B$) ist, deren erlaubter Maximalwert ($\alpha_{max}$) als Quotient ($\alpha_{max} = \Delta\vartheta_{max}/\tau$) aus dem maximal zulässigen Schleppfehler ($\Delta\vartheta_{max}$) und einer Zeitkonstanten ($\tau$) der Messzelle (MC) für einen Temperaturausgleich zwischen dem Messzelleninneren und dem Wasserbad (WB) definiert ist, wobei der erlaubte Maximalwert der zeitlichen Drift ($\alpha_{max}$) der Wasserbadtemperatur ($\vartheta_B$) durch einen verzögerungsarmen und schnellen regelbaren Ausgleich der dem Wasserbad (WB) zu- und abfließenden Wärmeströme (P±) in einem solchen Maße eingehalten wird, dass der resultierende Betrag des Restwärmeflusses ($P_{rest}$) einen entsprechend vorgegebenen Maximalwert ($P_{restmax}$) nicht übersteigt.

2. Messverfahren nach Anspruch 1,
   **dadurch gekennzeichnet, dass**
   die Wasserbadtemperatur ($\vartheta_B$) mittels des resultierenden Restwärmeflusses ($P_{rest}$) ungefähr mit einer Abweichung von ± 1K auf der mittleren Umgebungstemperatur gehalten wird.

3. Messverfahren nach Anspruch 2 oder 3,
   **dadurch gekennzeichnet, dass**
   der Energieeintrag in das Wasserbad (WB) durch das Rühren ($P_R$) auch zu seiner schnellen und verzögerungsarmen, regelbaren Erwärmung ($P_H$) ausgenutzt wird.

4. Messverfahren nach mindestens einem der Ansprüche 1 bis 3,
   **dadurch gekennzeichnet, dass**
   der Wärmewiderstand (R) der Außenisolierung (I) des Wasserbades (WB) hoch ist.

5. Messverfahren nach mindestens einem der Ansprüche 1 bis 4,
   **dadurch gekennzeichnet, dass**
   der Wärmewiderstand (R) der Wasserbadkühlung (PE) auf der Badseite hoch ist.

6. Messverfahren nach mindestens einem der Ansprüche 1 bis 5,
   **dadurch gekennzeichnet, dass**
   die Temperatur der Flüssigkeitsprobe ($\vartheta_P$) in einem getrennt geregelten Vorbad (PB) der Wasserbadtemperatur ($\vartheta_B$) angeglichen wird.

7. Messverfahren nach mindestens einem der Ansprüche 1 bis 6,
   **dadurch gekennzeichnet, dass**
   der Messablauf automatisch und computergestützt (PC) abläuft und der Salzgehalt (S) der Flüssigkeitsprobe (PROBE) aus den gemessenen Werten für Temperatur ($\vartheta_B$) und Leitfähigkeit ($\kappa$) nach der UNESCO-Formel berechnet wird.

8. Vorrichtung zur Durchführung des Verfahrens nach mindestens einem der Ansprüche 1 bis 8 zur Bestimmung des Salzgehaltes von Flüssigkeiten durch standardkalibrierte Messungen der elektrischen Leitfähigkeit einer temperierten Flüssigkeitsprobe, die aus einer Probenflasche in eine Messzelle überführbar ist, die in einem Wasserbad angeordnet ist, das mit einem Kühl-, einem Rühr- und einem Heizelement sowie mit einem Wärmetauscher ausgerüstet ist und an seiner Wandung eine Außenisolierung aufweist, mit einer Regeleinrichtung, wobei vorgesehen ist, dass die aktuelle Wasserbadtemperatur ($\vartheta_B$) als Aquivalent für die Probentemperatur ($\vartheta_P$) mit einer hohen Wiederholgenauigkeit gemessen wird unter Einbeziehung eines von der geforderten Genauigkeit bei der Salzgehaltsbestimmung (S) festgelegten maximal zulässigen Schleppfehlers ($\Delta\vartheta_{max}$) zwischen Wasserbad- und Probentemperatur ($\vartheta_B$, $\vartheta_P$) und dass der Regelparameter für die Berücksichtigung der thermischen Verhältnisse die aus den Temperaturmessungen ableitbare zeitliche Drift ($\alpha = \Delta\vartheta_B/t$) der Wasserbadtemperatur ($\vartheta_B$) ist, deren erlaubter Maximalwert ($\alpha_{max}$) als Quotient ($\alpha_{max} = \Delta\vartheta_{max}/\tau$) aus dem maximal zulässigen Schleppfehler ($\Delta\vartheta_{max}$) und einer Zeitkonstanten ($\tau$) der Messzelle (MC) für einen Temperaturausgleich zwischen dem Messzelleninneren und dem Wasserbad (WB) definiert ist, wobei der erlaubte Maximalwert der zeitlichen Drift ($\alpha_{max}$) der Wasserbadtemperatur ($\vartheta_B$) durch einen verzögerungsarmen und schnellen regelbaren Ausgleich der dem Wasserbad (WB) zu- und abfließenden Warmeströme (P$\pm$) in einem solchen Maße eingehalten wird, dass der resultierende Betrag des Restwärmeflusses (P$_{rest}$) einen entsprechend vorgegebenen Maximalwert (P$_{restmax}$) nicht übersteigt, wobei zur direkten Messung der aktuellen Wasserbadtemperatur ($\Delta\vartheta_B$) ein Präzisionsthermometer (TM) im Wasserbad vorgesehen ist, das eine Langzeitstabilität von unter 1 mK pro Jahr und eine Zeitkonstante von unter 0,5 s aufweist.

9.  Messvorrichtung nach Anspruch 8,
    **dadurch gekennzeichnet, dass**
    das Präzisionsthermometer (TM) mit temperaturabhängigen Halbleiterwiderstanden ausgerüstet ist.

10. Messvorrichtung nach Anspruch 8 oder 9,
    **dadurch gekennzeichnet, dass**
    der zum Rühren und Heizen des Wasserbades (WB) vorgesehene Rührer als drehzahlsteuerbarer Rührpropeller (Q) mit einem schiffsschraubenähnlichen Rührblatt (SP) mit hohem hydrodynamischen Wirkungsgrad ausgebildet ist, der von einem stufenlos regelbaren und außerhalb des Wasserbades (WB) angeordneten Elektromotor (EM) antreibbar ist.

11. Messvorrichtung nach mindestens einem der Ansprüche 8 bis 10,
    **dadurch gekennzeichnet, dass**
    in der Wandung des Wasserbades (WB) mindestens ein Peltierelement (PE) angeordnet ist, das auf seiner Kühlseite im Wasserbad (WB) eine thermische Isolation (I) aufweist.

12. Messvorrichtung nach mindestens einem der Ansprüche 8 bis 11,
    **dadurch gekennzeichnet, dass**
    die Messzelle (MC) ein Volumen im Bereich von 2 ml und Streifenelektroden (SE) aufweist.

13. Messvorrichtung nach mindestens einem der Ansprüche 8 bis 12,
    **dadurch gekennzeichnet, dass**
    ein separates regelbares Vorbad (PB) mit einem Vorwärmetauscher (PWT) zur Temperierung der Flüssigkeitsprobe (PROBE) vorgesehen ist.

14. Messvorrichtung nach mindestens einem der Ansprüche 8 bis 13,
    **dadurch gekennzeichnet, dass**
    zur Durchführung von Standardkalibrierungen und Messungen ein Vierwegeventil (FV) mit Zugängen zu einer Ampulle (A) mit Standardseewasser (SSW), zu einer Flasche (B) mit Probenwasser (PROBE) sowie zu einer Reinigungswasser- und einer Luftleitung (H$_2$O,Air) vorgesehen ist

15. Messvorrichtung nach mindestens einem der Ansprüche 8 bis 14,
    **dadurch gekennzeichnet, dass**
    zum Entleeren der Messzelle (MC) eine Membranpumpe (MP) vorgesehen ist

16. Messvorrichtung nach mindestens einem der Ansprüche 8 bis 15,
    **dadurch gekennzeichnet, dass**
    zum Befüllen der Messzelle (MC) eine Dosierpumpe (DP) vorgesehen ist.

17. Messvorrichtung nach mindestens einem der Ansprüche 8bis 16,
    **dadurch gekennzeichnet, dass**
    eine Recheneinheit (PC) zur Wasserbadregelung, Messablaufsteuerung und Ergebnisspeicherung vorgesehen ist.

18. Messvorrichtung nach mindestens einem der Ansprüche 8 bis 17,
    **dadurch gekennzeichnet, dass**
    die Leitfähigkeitsmessung der Flüssigkeitsprobe (PROBE) an einer vollautomatisch selbstabgleichenden Präzisionsbrücke erfolgt.

19. Messvorrichtung nach mindestens einem der Ansprüche 8 bis 18,
**dadurch gekennzeichnet, dass**
eine Anzeige für die Erfüllung der Messbedingungen vorgesehen ist.

**Claims**

1. Method of determining the salinity of liquids by standard calibrated measurements of the electrical conductivity of a heated liquid sample in a measuring cell arranged in a constantly cooled and mechanically stirred as well as heatable water bath which is insulated to the exterior under control parametric consideration of the thermal conditions in the water bath
**characterized by** the fact
that the actual water bath temperature ($\vartheta_B$) is measured as an equivalent of the temperature ($\vartheta_P$) of the sample with a high repetitive accuracy and inclusion of a maximum permissible lag error ($\Delta\vartheta_{max}$) between the water bath and sample temperature ($\vartheta_B$, $\vartheta_P$) set by the required accuracy of determining the salinity (S), and that the control parameter for taking into account the thermal conditions is the time-wise drift ($\alpha = \Delta\vartheta_B/t$) of the water bath temperature ($\vartheta_B$) derivable from the temperature measurements, the permissible maximum value ($\alpha_{max}$) of which is defined as quotient ($\alpha_{max} = \Delta\vartheta_{max}/\tau$) of the maximum permissible lag error ($\Delta\vartheta_{max}$) and a time constant ($\tau$) of the measuring cell (MC) for a temperature equalization between the interior of the measuring cell and the water bath (WB), whereby the permissible maximum value of the time-wise drift ($\alpha_{max}$) of the water bath temperature ($\vartheta_B$) is maintained by a low-lag and quickly controllable compensation of the heat currents (P±) flowing into and out of the water bath (WB) to such a degree that the resulting quantity of the residual heat current ($P_{rest}$) does not exceed a predetermined maximum value ($P_{restmax}$).

2. Measuring method of claim 1,
**characterized by** the fact that
the water bath temperature ($\vartheta_B$) is maintained with the resultant residual heat current ($P_{rest}$) at the mean ambient temperature approximately with a deviation of $\pm$ 1 K.

3. Measuring method according to claim 1 or 2,
**characterized by** the fact that
the energy input into the water bath (WB) by the stirring ($P_R$) is also utilized for the quick and low-lag controllable heating ($P_H$) thereof.

4. Measuring method according to at least one of claims 1 to 3,
**characterized by** the fact that
the heat resistance (R) of the exterior insulation (I) of the water bath (WB) is high.

5. Measuring method according to at least one of claims 1 to 4,
**characterized by** the fact that
the heat resistance (R) of the water bath cooling (PE) on the side of the bath is high.

6. Measuring method according to at least one of claims 1 to 5,
**characterized by** the fact that
that the temperature of the liquid sample ($\vartheta_P$) is adjusted to the water bath temperature ($\vartheta_B$) in a separately controlled advance bath (PB).

7. Measuring method according to at least one of claims 1 to 6
**characterized by** the fact that
the measuring sequence is carried out automatically by a computer (PC) and that the salinity (S) of the liquid sample (PROBE) is calculated from the measured values of temperature ($\vartheta_B$) and conductivity ($\kappa$) on the basis of the UNESCO formula.

8. Apparatus for practicing the method according to at least one of claims 1 to 7 of determining the salinity of liquids by standard calibrated measurements of the electrical conductivity of a heated liquid sample which may be transferred from a sample vial into a measuring cell arranged in a water bath provided with a cooling, a stirring and a heating element as well as with a heat exchanger and provided at its wall with an external insulation with a control device whereby it is intended that the actual temperature ($\vartheta_b$) of the. water bath is measured with high repetitive accuracy and including a maximum permissible lag error ($\Delta\vartheta_{max}$) between the water bath and sample temperature ($\vartheta_B$, $\vartheta_p$) determined by the accuracy demanded in by the determination of salinity (S) as the equivalent of the temperature ($\vartheta_p$) of the sample and that the control parameter for taking into account the thermal conditions is the time-wise drift ($\alpha = \Delta\vartheta_B/t$) of the water bath temperature ($\vartheta_b$) the permissible maximum value ($\alpha_{max}$) of which is defined as quotient ($\alpha = \Delta\vartheta_{max}/\tau$) of the maximum permissible lag error ($\Delta\vartheta_{max}$) and a time constant ($\tau$) of the measuring cell (MC) for a temperature balancing between the interior of the measuring cell and the water bath (WB), whereby the permissible maximum value of the time-wise drift ($\alpha_{max}$) of the water bath temperature ($\vartheta_b$) is maintained to such a degree by a low-lag and quick controllable adjustment of the heat currents (P±) flowing into and out of the water bath (WB) that the quantity of the resulting residual heat current ($P_{rest}$) does not exceed a corresponding predetermined maximum value ($P_{restmax}$), whereby for the direct measurement of the actual water bath temperature ($\Delta\vartheta_B$) there is provided in the water bath a precision thermometer (TM) having a long term stability of less than 1 mK per year and a time constant of less the 0,5 s.

9. Measuring apparatus of claim 8,
   **characterized by** the fact that
   the precision thermometer (TM) is provided with temperature dependent semiconductor resistors.

10. Measuring apparatus according to claim 8 or 9,
    **characterized by** the fact that
    the stirrer provided for stirring and heating the water bath (WB) is structured as a rotationally controllable stirring propeller (Q) having a stirring vane (SP) similar to a ships screw of high hydrodynamic efficiency which is drivable by a continuously controllable electric motor (EM) arranged at the exterior of the water bath (WB).

11. Measuring apparatus according to at least one of claims 8 to 10,
    **characterized by** the fact that
    that in the wall of the water bath (WB) there is arranged at least one Peltier element (PE) provided with a thermal insulation (I) at the cooling side of the water bath (WB).

12. Measuring apparatus according to at least one of claims 8 to 11,
    **characterized by** the fact that
    the measuring cell (MC) has a volume in the range of 2 ml and is provided with strip electrodes (SE).

13. Measuring apparatus according to at least one of claims 8 to 12,
    **characterized by** the fact that
    that for heating the liquid sample (PROBE) there is provided a separate controllable advance bath (PB) provided with a preheat exchanger (PWT).

14. Measuring apparatus according to at least one of claims 8 to 13,
    **characterized by** the fact that
    for carrying out standard calibrations and measurements there is provided a four-way valve (FV) provided with inputs to a vial (A) of standard see water (SSW), to a bottle (B) of sample water (PROBE) as well as to a cleaning and an air conduit ($H_2O$, Air).

15. Measuring apparatus according to at least one of claims 8 to 14,
    **characterized by** the fact that
    for evacuating the measuring cell (MC) there is provided a diaphragm pump (MP).

16. Measuring apparatus according to at least one of claims 8 to 15,
    **characterized by** the fact that
    for filling the measuring cell (MC) there is provided a dosage pump (DP).

17. Measuring apparatus according to at least one of claims 8 to 16,
    **characterized by** the fact that
    a computer (PC) is provided for regulating the water bath, controlling the measuring sequence, and storing results.

18. Measuring apparatus according to at least one of claims 8 to 17,

**characterized by** the fact that
that the conductivity measurement of the liquid sample (PROBE) is carried out at a fully automatically balancing precision bridge.

**19.** Measuring apparatus according to at least one of claims 8 to 18,
**characterized by** the fact that
there is provided an indicator of satisfied measuring conditions.

**Revendications**

**1.** Procédé pour déterminer la teneur en sel de liquides par des mesures calibrées normalisées de la conductivité électrique d'un échantillon de liquide mis en température dans une cellule de mesure placée dans un bain d'eau refroidi de manière constante, agité mécaniquement, chauffé, et isolé vis-à-vis de l'extérieur, en tenant compte des paramètres de régulation des conditions thermiques dans le bain d'eau,
**caractérisé en ce qu'**
on mesure la température actuelle du bain d'eau ($\vartheta_B$) comme équivalent de la température de l'échantillon ($\vartheta_P$) avec une fidélité élevée de mesure en tenant compte d'une erreur de traînée maximale autorisée ($\Delta\vartheta_{max}$) entre la température du bain et la température maximale fixée de l'échantillon ($\vartheta_B$, $\vartheta_P$), pour la précision requise pour la détermination de la teneur en sel (S) et
le paramètre de régulation pour tenir compte des conditions thermiques est la dérive en fonction du temps des mesures de température ($\alpha = \Delta\vartheta_B/t$) de la température du bain ($\vartheta_B$) dont la valeur maximale autorisée ($\alpha_{max}$) est le quotient ($\alpha_{max} = \Delta\vartheta_{max}/\tau$) de l'erreur de traînée maximum autorisée ($\Delta\vartheta_{max}$) et d'une constante de temps ($\tau$) de la cellule de mesure (MC) pour compenser la température entre l'intérieur de la cellule de mesure et le bain (WB),
la valeur maximale autorisée de la dérive dans le temps ($\alpha_{max}$) de la température du bain ($\vartheta_B$) étant maintenue par une compensation à faible retard et régulée rapidement du flux thermique (P±) qui est échangé avec le bain (WB) de façon que la valeur résultante du flux thermique résiduel ($P_{rest}$) ne dépasse pas une valeur maximale prédéterminée ($P_{restmax}$).

**2.** Procédé de mesure selon la revendication 1,
**caractérisé en ce que**
la température du bain ($\vartheta_B$) est maintenue à la température ambiante moyenne sensiblement avec une différence de ± 1K, par le flux thermique résiduel résultant ($P_{rest}$).

**3.** Procédé de mesure selon les revendications 2 ou 3,
**caractérisé en ce qu'**
on utilise l'apport énergétique au bain (WB) par l'agitation ($P_R$) également pour son élévation de température réglable ($P_H$), rapide et sans retard.

**4.** Procédé de mesure selon au moins l'une des revendications 1 à 3,
**caractérisé en ce que**
la résistance thermique (R) de l'isolation extérieure (I) du bain (WB) est élevée.

**5.** Procédé de mesure selon au moins l'une des revendications 1 à 4,
**caractérisé en ce que**
la résistance thermique (R) du refroidissement du bain (PE) du côté du bain est élevée.

**6.** Procédé de mesure selon au moins l'une des revendications 1 à 5,
**caractérisé en ce qu'**
on compense la température de l'échantillon de liquide ($\vartheta_P$) dans un bain intermédiaire, régulé séparément (PB) à la température du bain ($\vartheta_B$).

**7.** Procédé de mesure selon au moins l'une des revendications 1 à 6,
**caractérisé en ce que**
l'opération de mesure se déroule automatiquement avec l'assistance d'un ordinateur (PC) et la teneur en sel (S) de l'échantillon de liquide (PROBE) se calcule à partir des valeurs mesurées de la température ($\vartheta_B$) et de la conductivité ($\kappa$) selon la formule de l'UNESCO.

**8.** Dispositif pour la mise en oeuvre du procédé selon au moins l'une des revendications 1 à 7 pour déterminer la teneur en sel de liquides par des mesures calibrées normalisées de la conductivité électrique d'un échantillon de liquide mis en température, transféré d'une bouteille à échantillon dans une cellule de mesure placée dans un bain d'eau équipé d'un élément de refroidissement, d'un élément d'agitation et d'un élément de chauffage ainsi que d'un échangeur de chaleur et dont la paroi est munie d'une isolation extérieure d'une installation de régulation selon lequel

la température actuelle du bain d'eau ($\vartheta_B$) est mesurée comme équivalent de la température de l'échantillon ($\vartheta_P$) avec une fidélité de mesure élevée en intégrant une erreur de traînée ($\Delta\vartheta_{max}$) maximale autorisée entre la température du bain et celle de l'échantillon ($\vartheta_B$, $\vartheta_P$), erreur fixée par la précision requise pour la détermination de la teneur en sel (S) et le paramètre de régulation pour tenir compte des conditions thermiques est la dérive ($\alpha = \Delta\vartheta_B/t$) de la température du bain ($\vartheta_B$) déduite des mesures de température, la valeur maximale autorisée ($\alpha_{max}$) de cette dérive étant le quotient ($\alpha_{max} = \Delta\vartheta_{max}/\tau$) de l'erreur de traînée maximale autorisée ($\Delta\vartheta_{max}$) et d'une constante de temps ($\tau$) de la cellule de mesure (MC) pour une compensation de température entre l'intérieur de al cellule de mesure et le bain d'eau (WB),

la valeur maximale autorisée de la dérive dans le temps ($\alpha_{max}$) de la température du bain ($\vartheta_B$) étant maintenue par une compensation à faible retard et réglable rapidement des flux thermiques (P±) échangés avec le bain (WB) pour que la valeur résultante du flux thermique résiduel ($P_{rest}$) ne dépasse pas une valeur maximale correspondante prédéterminée ($P_{restmax}$),

la mesure directe de la température actuelle du bain ($\Delta\vartheta_B$) étant faite par un thermomètre de précision (TM) placé dans le bain et qui présente une stabilité à long terme inférieure à 1 mK par an et une constante de temps inférieure à 0, 5 s.

**9.** Dispositif de mesure selon la revendication 8,
**caractérisé en ce que**
le thermomètre de précision (TM) est équipé de résistances semiconductrices dépendant de la température.

**10.** Dispositif de mesure selon la revendication 8 ou 9,
**caractérisé en ce que**
l'agitateur destiné à agiter et chauffer le bain (WB) est une hélice d'agitateur (Q) dont la vitesse de rotation est commandée et qui comporte une pale d'agitateur (SP) en forme d'hélice de bateau à rendement hydrodynamique élevé, cet agitateur étant entraîné par un moteur électrique (EM) réglable en continu, placé à l'extérieur du bain (WB).

**11.** Dispositif de mesure selon au moins l'une des revendications 8 à 10,
**caractérisé par**
au moins un élément à effet Peltier (PE) placé dans la paroi du bain (WB) dont le côté froid dans le bain (WB) présente une isolation thermique (I).

**12.** Dispositif de mesure selon au moins l'une des revendications 8 à 11,
**caractérisé en ce que**
la cellule de mesure (MC) a un volume de l'ordre de 2 ml et des électrodes en forme de rubans (SE).

**13.** Dispositif de mesure selon au moins l'une des revendications 8 à 12,
**caractérisé par**
un bain préalable (PB) réglable séparément avec un échangeur de chaleur amont (PWT) pour mettre l'échantillon de liquide (PROBE) à la température.

**14.** Dispositif de mesure selon au moins l'une des revendications 8 à 13,
**caractérisé par**
une vanne à quatre voies (FV) pour effectuer les calibrages normalisés et les mesures, avec des accès à une ampoule (A) avec de l'eau de mer standard (SSW) avec une bouteille (B) avec de l'eau échantillon (PROBE) ainsi qu'une conduite d'eau de rinçage et une conduite d'air ($H_2O$,Air).

**15.** Dispositif de mesure selon au moins l'une des revendications 8 à 14,
**caractérisé par**
une pompe à membrane (MP) pour évacuer la cellule de mesure (MC).

**16.** Dispositif de mesure selon au moins l'une des revendications 8 à 15,

**caractérisé par**
une pompe de dosage (DP) pour remplir la cellule de mesure (MC).

17. Dispositif de mesure selon au moins l'une des revendications 8 à 16,
    **caractérisé par**
    une unité de calcul (PC) pour réguler le bain d'eau, pour commander les opérations de mesure et enregistrer les résultats.

18. Dispositif de mesure selon au moins l'une des revendications 8 à 17,
    **caractérisé en ce que**
    la mesure de la conductivité de l'échantillon de liquide (PROBE) se fait sur un pont de précision autoéquilibré, totalement automatique.

19. Dispositif de mesure selon au moins l'une des revendications 8 à 18,
    **caractérisé par**
    un affichage indiquant que les conditions de mesure sont satisfaites.

Fig.1

P
ϑ

$K_{t1}$  $M_{t2}$  $M_{t3}$  $M_{t4}$  $M_{t5}$  $M_{t6}$  $K_{t7}$

$P_R$

$P_H$

0                                                                                     t

$ϑ_B$

$t_{x1}$                              $t_{x2}$

$P_I+P_K+P_R+P_H$

$P_I$

$P_K$

(prior art: AS 8400)

P
ϑ

$P_R$

$K_{t1}$  $M_{t2}$  $M_{t3}$  $M_{t4}$  $M_{t5}$  $M_{t6}$  $K_{t7}$

α

$P_I+P_K+P_R$

0                                                                                     t

$ϑ_B$

$t_{x1}$                    $t_{x2}$

α

$P_I$

$P_K$

(invention: LRM)

# Fig.2

Fig.3